(19) Europäisches Patentamt
European Patent Office
Office européen des brevets

(11) Publication number: **0 332 468 B1**

(12) # EUROPEAN PATENT SPECIFICATION

(45) Date of publication of patent specification: **08.06.94**

(51) Int. Cl.⁵: **H04N 1/46**, H04N 1/40

(21) Application number: **89302410.9**

(22) Date of filing: **10.03.89**

(54) **Image forming apparatus.**

(30) Priority: **10.03.88 JP 54811/88**
**10.03.88 JP 54812/88**
**10.03.88 JP 54813/88**
**10.03.88 JP 54814/88**
**10.03.88 JP 54815/88**
**10.03.88 JP 54816/88**
**10.03.88 JP 54817/88**
**10.03.88 JP 54819/88**
**10.03.88 JP 54820/88**
**10.03.88 JP 54821/88**
**27.07.88 JP 185478/88**

(43) Date of publication of application:
**13.09.89 Bulletin 89/37**

(45) Publication of the grant of the patent:
**08.06.94 Bulletin 94/23**

(84) Designated Contracting States:
**DE FR GB IT**

(56) References cited:

| | |
|---|---|
| **EP-A- 0 213 891** | **EP-A- 0 225 100** |
| **FR-A- 2 535 477** | **GB-A- 2 102 240** |
| **US-A- 3 961 132** | **US-A- 4 004 079** |

(73) Proprietor: **CANON KABUSHIKI KAISHA**
**30-2, Shimomaruko 3-chome**
**Ohta-ku Tokyo 146(JP)**

(72) Inventor: **Hayashi, Kimiyoshi**
**257-6, Teshiro-cho**
**Souka-shi Saitama-ken(JP)**
Inventor: **Arai, Hitoshi**
**7-6-101, Manabe-cho 4-chome**
**Tsuchiura-shi Ibaraki-ken(JP)**
Inventor: **Hirooka, Kazuhiko**
**14-2, Negishi 4-chome**
**Taito-ku Tokyo(JP)**

(74) Representative: **Beresford, Keith Denis Lewis et al**
**BERESFORD & Co.**
**2-5 Warwick Court**
**High Holborn**
**London WC1R 5DJ (GB)**

EP 0 332 468 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

IEEE TRANSACTIONS ON COMMUNICATIONS. vol. COM29, no. 12, December 1981, NEW YORK US pages 1898 - 1925; J. C. STOFFEL: "A Survey of Electronic Techniques for Pictorial Image Reproduction"

IEEE/IEICE GLOBAL TELECOMMUNICATIONS CONFERENCE 1987, 15-18 Nov. 1987, Tokyo (JP) vol. 1, 1987, pages 1171 - 1175; S. KATO et al.: "Dithering methods of color images directly applicable to run-length coding"

IEEE TRANSACTIONS ON ELECTRON DEVICES. vol. ED-31, no. 9, September 1984, NEW YORK US pages 1258 - 1263; J. OHYA et al.: "Color Thermal Ink-Transfer Imaging"

## Description

This invention relates to an image forming apparatus for processing image data and forming a tone image.

With an apparatus of this kind, a screen half-toned (converted into half-tone dot) image is formed by a dither method, light-emission time control method, brightness modulation control method, etc. With methods such as the dither method, however, the tonality and resolution of the image decline and there is no improvement in image quality. With the light-emission time control method and brightness modulation method, screen half-toning is insufficient and impediments are encountered at print-out.

When an original image for printing presses is formed or an ordinary copy is made using the conventional apparatus of the above-described type, dot formation is carried out without changing the method of image representation (i.e., the method of image reproduction). When the original image printing presses is produced, therefore, printing dot size is not constant and the original image cannot be used as such an original image for printing presses.

Further, in the conventional apparatus of the foregoing type, an enhancement in image quality is attempted by applying so-called screen angle control in a printing technique, see here EP-A-0 213 891 of the present applicants. With the dither method, however, tonality and resolution decline. Though tonality and resolution are improved with a dot modulation method or the brightness modulation method, performing image processing for each and every dot is fundamental and, in consequence, the screen angle is greatly limited by the main scanning and subsidiary scanning methods and a screen angle cannot be applied at will.

With the conventional apparatus of the foregoing type, an irregularity shading occurs when there is a deviation in speed combination between a photosensitive body drive mechanism and a laser irradiation mechanism, by way of example. When an image is outputted, therefore, the screen half-tones and irregular shade interfere and the image deteriorates.

With the abovementioned apparatus, tonal representation of an image is performed by the dither method, light-emission time control method, brightness modulation method, etc. However, tone jump occurs with these methods owing to an electrophotographic characteristic at the time of image formation. In addition, color tone changes unless the origin of the screen half-tones are aligned when the screen half-tones are formed.

With the abovementioned apparatus, color print images for toners of the three colors yellow (Y), magenta (M) and cyan (C) along with the color black (Bk) for inking are color-synthesized in the sequence C → M → Y → Bk or M → C → Y → Bk. However, when colors are synthesized in these sequences, the Y toner, which has high reflectance and relative luminous efficiency, rises to the top layer (see Fig. 15). As a result, the image tends to have a strong yellowish color and color reproducibiilty declines.

Further, in the conventional apparatus of the foregoing type, colour information (inscription) is not produced together with the printing image, it, therefore, has a drawback in management of the printing presses.

Further, in the above conventional apparatus, a registration mark for adjusting the printing document is not totally processed. Therefore, color divergences inevitably occur in the printing process.

According to the conventional technology, an image is produced on a transparent transfer material, such as OHP sheet, where the image is exposed on the sheet and the sheet used to expose the image as a negative printing master. However, since there is a variation the thickness of the toner on the transfer material, it causes fluctuation of the intensity of radiation during the printing.

In older to obtain a reproduced image having a high quality, the applicant has already proposed the cases indicated below. However, further improvements are sought.
US-A-4800442, JP-A-61-283272, JP-A-61-283274, JP-A-61-283275, JP-A-62-104268, EP-A-0213891, JP-A-62-49776, EP-A-0212990, EP-A-0213949, EP-A-0216536, US-A-4763199, JP-A-62-101175, JP-A-62-101177, JP-A-62-101182, EP-A-0225100, JP-A-62-181575, JP-A-62-233978, JP-A-62-233979 JP-A-63-58584

It is an object of the invention to simplify management of printing from mono-colour masters produced by an apparatus of the above type. The invention provides an image forming apparatus comprising: tone processing means for tone processing colour separated image data to generate image data for forming images relating to each of a plurality of colour components; image forming means for automatically forming plural output images on respective recording media, one for each colour, in accordance with the colour separated image data processed by said tone processing means; wherein each such image formed includes both the image data supplied by the processing means and a specific pattern indicating to which colour component of the colour separated image the formed image relates.

By this mechanism, even though the separate images may be in fact recorded in the same colour (black), those responsible for management of the subsequent printing process can reliably identify which image corresponds to which colour component (C, M, Y, Bk).

The apparatus may for example comprise pattern signal generating means for generating a signal defining said specific pattern, and pattern combining means for combining said pattern signal with the output image data of the tone processing means. The pattern signal generating means may for example include a font ROM.

The tone processing means may for example comprise modulating means for generating a pulse width modulated signal representing the colour separated image data of each colour. The apparatus may further comprise means for selectively applying to said modulating means the colour separated image data and a pattern signal defining said specific pattern.

The apparatus may further comprise input means such as a scanner for inputting image data, and means for generating from the input image data the colour separated image data for supply to the tone processing means. By such an apparatus, colour separated images for use as printing masters can be prepared directly from an original full colour image.

The apparatus may further comprise mode selection means for (i) in a first mode causing the image forming means to combine the colour separated image data of each colour on a single recording medium, thereby to form a single multi-coloured output image, and (ii) in an alternative mode to generate separate mono-colour output images for each colour on respective recording media, as described above.

The tone processing means may include density converting means for subjecting said colour separated image data of each colour to a density conversion, in accordance with predetermined screen half-toning information. The half-toning information may for example by based on the following equation:

$$V_{ij}' = nV_{ij} - r(P_{ij} - 1)$$
$$0 < V_{ij}' < r$$

where

$V_{ij}$ is an input density of each pixel of interest,

$V_{ij}'$ is an output density of each pixel of interest,

n is the number of pixels in a predetermined area,

r is maximum density, and

$P_{ij}$ is a priority weighting coefficient.

Advantageously, the weighting coefficient can impart a generally higher priority to pixels which are centrally located within said predetermined area.

The density conversion may for example operate to concentrate dots and to define an effective screen angle for the colour-separated image. It may further be advantageous if the density converting means does not perform a density conversion on the specific pattern.

Other features and advantages of the present invention will be apparent from the following description of exemplary embodiments, shown in the accompanying drawings, in which like reference characters designate the same or similar parts throughout the figures thereof.

Figs. 1(A) and (B) are functional block diagrams illustrating a digital color reader/printer embodying the present invention;

Fig. 2(comprised of 2A, 2B) is a block diagram illustrating the details of a tone control circuit according to the embodiment;

Fig. 3(A) is a timing chart of the principal signals of a printing section;

Fig. 3(B) is a block diagram illustrating the details of synchronising control circuitry in the printing section;

Figs. 4(A) - (D) are views for describing screen half-toning processing patterns according to the embodiment;

Fig. 5 is a block diagram illustrating a screen half-toning processing circuit according to the embodiment;

Fig. 6(A) is a view showing an example of the distribution of screen angles according to the embodiment;

Fig. 6(B) is a view showing an example of the distribution of screen angles used in the conventional printing field;

Figs. 6(C) - (H) are views showing examples of moire patterns;

Fig. 7 is a view for describing the conversion characteristic of a LUT (1) according to the embodiment;

Figs. 8(A) - (D) are views for describing the conversion characteristic of a LUT (2) according to the embodiment;

Fig. 9 is a block diagram ilustrating the details of a font control circuit according to the embodiment;

Fig. 10 is a view illustrating an example of an output image font-combined by a font control circuit according to the embodiment;

Fig. 11 is a sectional view illustrating the mechanism of a digital color reader/printer of the embodiment;

Fig. 12 is a flowchart illustrating the operation of the controller of a reader;

Fig. 13(A) is a flowchart illustrating the operation of the controller of a printer;

Fig. 13(B) is a flowchart illustrating the details of a procedure for outputting a color-separated Y-color print image according to the embodiment;

Fig. 14 is a sectional view of the pattern of an image formed on a transfer material according to the embodiment;

Fig. 15 is a sectional view illustrating the pattern of an image formed according to the prior art;

Fig. 16 is a view illustrating the relationship between wavelength and reflectance; and

Fig. 17 is a view illustrating the states of reflection and absorption of an ideal toner and an actual toner.

Fig. 18 is a circuit diagram illustrating a circuit for generating mirror image signals.

Fig. 19 is a flowchart illustrating jam detections and recovery thereof.

An embodiment of the present invention will now be described in detail with reference to the accompanying drawings.

〈Description of the Mechanism〉

Fig. 11 is a sectional view illustrating the mechanism of a digital color reader/printer embodying the present invention. The reader/printer, shown at numeral 80, comprises a reading section 100 for reading a color original image upon separating the image thereof into colors, and a printing section 2000 for forming the image of a color reproduction (a copy image) or an original image for a printing press (a color-separated image) separated into each color print image.

The reading section 100 includes a scanning unit 83 which causes a lit exposure lamp 85 to scan an original 84, which has been placed on a platen, in the subsidiary direction, namely the direction of arrow A, in order to read the original 84. Light reflected from the original 84 is introduced into a focusing rod lens array 86 to be focused onto a contact-type color CCD sensor 87. For example, this CCD sensor chip has a resolution of 16 pel (62.5 um) and comprises 1024 pixels. The sensor chip is composed of a total of five chips interdigitated in the main scanning direction. The pixels of the sensor chip are divided into three areas of 15.5 um x 62.5 um, and color filters for cyan (C), green (G) and yellow (Y) are affixed to respective ones of the areas. Thus, the optical image focused on the CCD sensor 87 is converted into C, G and Y electrical signals, which are delivered to a signal processing block 88. The latter converts these C, G and Y electrical signals into yellow (Y), magenta (M), cyan (C) and black (BK) digital video data, which is delivered to the printing section 2000 color by color.

In the printing section 2000 the inputted video data is subjected to a density (pulse-width modulation) directly or upon being subjected to screen half-toning processing and, in certain cases, having a portion thereof combined with a font pattern. The resulting pulse-width modulated bi-level reproduction signal drives a laser beam in on/off fashion. The laser beam is converted into a high-speed horizontal (main) scanning beam by a polygon mirror 2289 rotating at high speed. This main scanning beam is reflected further by a mirror 2290 to carry out dot exposure, which corresponds to the video data, on the surface of a photosensitive drum 2900. One main scanning length of the laser beam corresponds to one main scanning length of the video data. In other words, the beam dots have a resolution of 16 pel in the illustrated embodiment.

The photosensitive drum 2900 rotates in the direction of arrow B at a constant speed. The photosensitive drum 2900 is uniformly charged in advance by a charging device 2297. An electrostatic latent image of each color-separated color print image is formed by beam-dot exposing the video data on the surface of the uniformly charged photosensitive drum 2900. For example, electrostatic latent images are formed in the order of the color print images Y, M, C, BK per revolution of the drum. The electrostatic latent images of the color print images are developed by respectively corresponding developers 2292 - 2295 and transferred to a transfer material (paper, etc.) wound on a transfer drum 2296.

As for a single cycle of scanning of an original performed by the reading section 100, first the Y-component dot image is exposed on the photosensitive drum, this image is developed by the Y developer, and the image is transferred to the transfer material. Next, the M-component dot image is exposed on the photosensitive drum, this image is developed by the M developer, and the image is transferred to the transfer material. Thereafter, and in similar fashion, exposure, development and transfer is performed for the C and BK components.

The supply and operation of the transfer material is controlled at this time, though the arrangement is not shown in the drawings. Specifically, and by way of example, the data of each color print image is superimposed on the same transfer paper to perform color synthesis so that an ordinary color copy is obtained. In obtaining the color copy, the transfer is made from the Y component first for the reason described below.

Fig. 17 is a view illustrating reflection and absorption of an ideal toner and actual toner. In Fig. 17, ① illustrates the state of an ideal toner, with the shaded portions indicating an absorptive state and the white portions a reflective state. Specifically, the C toner absorbs red light (R) only, the M toner green light (G) only, and the Y toner blue light (B) only; these toners reflect all other light. ② illustrates the state of the actual toner. Here the C toner absorbs a considerable amount of blue and green light besides red light, and the M toner absorbs a considerable amount of blue and some red light besides green light. The Y toner absorbs some green light and some red light besides blue light. Accordingly, only the yellow toner substantially approaches the ideal. Fig. 16 illustrates the relationship between wavelength and reflectance. If the Y toner were to be made the uppermost layer, then the toner colors of the underlying layers would have difficulty showing through owing to reflection of green and red light, and the reproducibility of each color would decline. For this reason, it is better to make the Y toner the lowermost layer.

If the Y toner is thus made the lowermost layer, then the reflection and absorption characteristics of the overlying M or C toner must be corrected. However, when each color layer is formed by toner particles as in electrophotograpy, this correction can only be performed by increasing the amount of toner particles, namely by increasing layer thickness. When this is done, however, there is a reduction in the amount of light which penetrates down to the C toner of the lowermost layer, with the result that color reproducibility suffers even in this case. In the present embodiment, therefore, screen angle control of each color print image is carried out in the manner described below.

Fig. 14 is a sectional view of an image formation pattern formed on a transfer material P in accordance with the embodiment. By virtue of screen angle control, overlapping of the Y, M and C toners is almost non-existent. Accordingly, no problems are encountered in terms of color reproducibility of the C toner of the lowermost layer. Even when this method is used, however, the screen half-tones become crowded together at the solid portions and overlapping of the screen half-tones cannot be avoided at the screen angle intersections. Consequently, placing the Y toner at the lowermost layer is meaningful and enhances overall color reproducibility.

Even if there is no overlapping of the screen half-tone latent images, there are instances where the screen half-tones on the transfer paper overlap owing to the effects of excess development, toner scattering at transfer and toner crushing at fixing. In order to prevent this, it is preferred that a developing material having an overall volume of more than 90% be distributed over the range

$$\frac{M}{2} < \gamma < \frac{3M}{2}$$

where $\gamma$ represents the particle diameter of the developing material and M the volume mean particle diameter, and that a developer which is more than 99% overall be distributed over the range

$$0 < \gamma < 2M$$

The fact that the volumete mean diameter of the abovementioned developing material is less than 8 um is desirable since this eliminates overlapping of the screen half-tones.

Next, it is possible to form an original image for color printing press by changing the transfer material for each color print image and making a transfer to transfer materials the number whereof corresponds to the number of color separations (Y, M, C, BK, etc.). The color in which development is to be made is controlled. Specifically, though it is acceptable to develop the data of the color print images in the corresponding colors Y, M, C and BK, it is also permissible to develop the data of each color print image in only one color (e.g. the color BK) from among the colors Y, M, C and BK. If this is done, a comparative evaluation of each original print image is easy and, moreover, color at the time of actual color printing can be decided by ink for printing. From this point of view, the printing mechanism of the embodiment is a color printing mechanism. However, this can be replaced by an ordinary printing mechanism which prints in a single color, namely the color black.

〈Description of the Functional Blocks〉

Figs. 1(A) and (B) are functional block diagrams of the digital color reader/printer embodying the invention. Fig. 1(A) is a functional block diagram of the reading section 100, and Fig. 1(B) is a functional block diagram of the printing section 2000.

In Fig. 1(A), numeral 10 a controller (CNTRU) which executes main control of the reading section 100. The controller 10 is equipped with a CPU 10-1, a ROM 10-2 storing a control program, of the kind shown in, e.g., Fig. 12, executed by the CPU 10-1, and a RAM 10-3 which the CPU 10-1 employs as a working memory. The controller 10 controls the rotation of a motor 12 via a motor driver (MOTOR DR) 13, thereby causing the scanning unit 83 to read and scan the original image. At this time the controller 10 controls the lighting of the exposure lamp 85 via a constant-voltage control circuit (CVR). The controller 10 receives a print (start) command signal and other key operation signals from an operating unit (OPU) 16 and sets various printing operating modes. For example, the operating unit 16 is equipped with a printing mode setting switch, not shown. In response to this command, the controller 10 sets an operating mode in such a manner that when the command is, e.g., an expression mode command, printing in a high-resolution half-toning mode is performed with regard to characters and line images and with high tonality with regard to photographic images. Alternatively, when the command is a copy mode command, an operating mode is set in such a manner that each of the color-separated signals is color-synthesized on one sheet of transfer paper. When the command is a command for forming an original print image for press , an operating mode is set in such a manner that each original print image is formed on transfer materials the number whereof corresponds to the number of color separations. There are various other commands as well. The controller 10 transmits the printing operating mode to the printing section 2000 via a communication line 24.

Numeral 1 in Fig. 1(A) denotes a synchronizing signal processor (SYNC CNTR). Based on a BD signal (the horizontal synchronizing signal of the printing section) transmitted by the printing section 2000 via a line 22, the processor 1 generates various timing signals on the reader side synchronizing to the BD signal. Numeral 2 denotes a contact-type color CCD sensor (87) for reading the image of an original in synchronization with a horizontal synchronizing signal (RHSYNC signal) of the reading section from the synchronizing signal processor 1, and for outputting read image signals 5. The read image signals 5 are outputted in the order of, e.g., the C signal, G signal and Y signal for each and every pixel. Since the CCD sensor comprises five chips in the present embodiment, in actuality signals are generated on five channels simultaneously. Numeral 3 denotes a signal processor (SPU) which executes wave-shaping processing such as edge enhancement in order to prevent attenuation of high-frequency components of the read image signal 5, by way of example.

Numeral 6 denotes an image processor comprising an analog processor (APU) 7, a buffer memory (MEN) 8 and an image processing unit (IPU) 9. The analog processor 7 separates C, G and Y signals of every pixel into a C signal, G signal and Y signal of every color. Next, red (R), green (G) and blue (B) color signals for every pixel are formed from the separated C, G and Y signals. This color signal formation is performed by the following processing:

(R) = (Y) - (G)
(G) = (G)
(B) = (C) - (G)

Each of the R, G and B signals so obtained is a brightness signal, and the relationship between brightness and output voltage is linear. This is further subjected to a density (LOG) conversion and into eight-bit density data (image data) of each of the colors Y, M, C by an A/D converter. The Y, M, C image data is composed of five channels of the CCD chip, and there is no synchronism between channels. The buffer memory 8 stores the five channels of Y, M and C image data in such a manner that they will all appear together. That is, 1024 x 5 pixels of the data arrayed in interdigitated fashion in the main scanning direction are stored so as to essential be on one straight line. Thereafter, with regard to the Y, M, C image data in the buffer memory 8, a desired color signal is selected by the controller 10, and a selected color signal is sent to the image processing unit (IPU) 9 color by color. The IPU executes shading correction processing for correcting distributed light, masking processing for correcting color tone, etc. Eight-bit video data per pixel of the results of processing is sent from the IPU 9 to the printing section 2000 via signal line 11.

As shown in Fig. 1(B), numeral 2500 denotes a controller (CNTRU) which executes main control of the printing section 2000. The controller 2500 includes a CPU 2110, a ROM 2502 storing a control program, of the kind shown in, e.g., Figs. 13(A), (B), executed by the CPU 2210, a RAM 2504 which the CPU 2110 employs as a working memory, and an A/D converter 2503 for converting analog detection signals from various external sensor circuits into digital signals. Thus, the controller 2500 controls the rotation of a driving motor 2285 to rotate a photosensitive drum (PHD) 2900 and a transfer drum (TD) 2296 at constant speeds. The amount of charge on the surface of the photosensitive drum 2900 sensed by a potential sensor 2600 is inputted via a potential measuring unit (PMU) 2700 and is A/D converted and read in. Furthermore, an image top signal (ITOP) sensed by a sensor 2800 is read in. Also, signals indicative of humidity and temperature, which are sensed by a humidity sensor 2298 and temperature sensor 2299 are A/D converted and read in. These are used in control, such as in correction of printer developing characteristics. The controller 2500 exchanges a variety of information with the controller 10 of the reading section via the communication line 24.

Numeral 2160 denotes a tone control circuit (TCC), the main functions of which are to establish synchronism between an image clock signal (RCLK) of the reading unit 100 and an image clock signal (VCLK) of the printing unit 2000, subject input video data to screen half-toning processing (converting into half-tone dot) when necessary, tone-convert input video data or video data following screen half-toning processing, depending upon the image output mode, and convert tone-converted video data into a binary-coded signal, which conforms to the density of the data, by means of pulse-width modulation. Numeral 2200 denotes a laser driver (LD) for on/off driving the beam of, e.g., a semiconductor laser (LU) , in accordance with the PWM signal from the tone control circuit 2160.

Fig. 2 is a block diagram illustrating the details of the tone control circuit of the embodiment. One of the video data inputs enters a look-up table [LUT (1)] 2101 for screen half-toning processing, where the input data is converted into video data for screen half-toning processing. The LUT (1) in the present embodiment is composed of a ROM or RAM. The LUT (1) is a conversion table which, when screen half-toned video data is outputted by an electrophotographic process via a screen half-tone processing circuit 2102, is for converting the input video data in advance in such a manner that the desired screen half-toned effect is obtained. This will be described in greater detail.

The screen half-tone processing circuit (SHPC) 2102 applies screen half-toning, described below, to video data for screen half-tone processing outputted by the LUT (1). For example, the image data is divided into a predetermined area, the pixel density within the area is converted into screen half-toned video data in a form concentrated and typified in the density of the central pixel position, and this is inputted to the A-side terminal of a selector 2103.

The other video data input is applied to the B-side terminal of the selector 2103 for the time when screen half-toning processing is not executed. In accordance with a select signal 2123 from a CPU 2110, the selector 2103 selects and outputs the video data after screen half-toning or before screeen half-toning. In the mode for forming an original image for a printing press, for example, it is desired that the video data following screen half-toning be selected and outputted. When an ordinary color copy is outputted, both video data after screen half-toning and video data before screen half-toning can be selected. In other words, various printing modes are conceivable and various signal processing combinations between processing circuits, described below, arise in accordance with these printing modes.

Next, the video data selected by the selector 2103 is inputted to the A-side terminal of a selector 2104. Font data from a font ROM (FROM) 2108 is inputted to the B-side terminal of the selector 2104. The font data is for combining (superimposing) character or symbol font patterns with a portion of the selected video signal. As will be described below, the CPU 2110 sets a font code and an address for combining the same, thereby enabling a font pattern to be combined at one or several locations of the image data of each color print image.

Eight-bit video data outputted by the selector 2104 enters a buffer memory (FIFO) 2105 in synchronism with an RHSYNC signal and RCLK signal from the reading section 100. The stored video data are read out in synchronism with a horizontal synchronizing signal (HSYNC signal) and video clock signal (VCLK signal) from a printer-side synchronizing control circuit (SYNC CNTR) 2113. In this way the speeds of the reading section 100 and printing section 2000 are coordinated.

The video data read out of the buffer memory 2105 is inputted to a look-up table [LUT (2)] 2106 for printer characteristic correction. The LUT (2) is for preparing already corrected data in such a manner that the input video data is made to conform (output density tonality is increased and linearized) to the printer output characteristic (e.g., beam spot diameter, toner particle diameter, etc.). The details will be described later with reference to Figs. 8(A) through (D).

The video data outputted by the LUT (2) is applied to a D/A converter 2107 to be converted into an analog video signal (AVS) that varies in stepped fashion. This analog video signal is applied to one input terminal of a comparator 2117 and one input terminal of a comparator 2118. Applied to the other input terminals of these comparators 2117, 2118 are respective pattern signals PS (1), PS (2) for binary coding (pulse-width modulating) the analog video signal in accordance with the density thereof. The pattern signal (1) is for reproducing or generating a line image and screen half-toned image, by way of example. In this case, resolution becomes a problem. Therefore, a pattern signal that has a frequency (e.g., 400 lines) the same as that of the video signal is used. The pattern signal (2) is for reproducing half-tone images. Since it is necessary to increase tonality in such case, the pattern signal used is such that the frequency will be one half (e.g., 200 lines) that of the abovementioned pattern signal for the line image, by way of example. That is, the relationship is such that one pattern signal is generated per two pixels.

This will be described in accordance with the circuitry. A quartz oscillator (XTAL) 2112 generates a clock signal having a frequency which is more than four times that of the imgae clock signal. The synchronizing control cirucit 2113 synchronizes the BD signal and the ITOP signal and procudes the main scanning synchronizing signal (HSYNC signal) and the basic clock signal (SCLK) signal). A frequency divider circuit (FDIV) 2114 frequency-divides the SCLK signal and produces clock signals (a TVCLK signal and a PVCLK signal) for pattern generation. The TVCLK signal is a clock signal which has a frequency twice that of the video signal and a duty ratio of 50%, by way of example. A pattern generating circuit 2115 generates the analog pattern signal (1) in accordance with the TVCLK signal. In the present embodiment, this signal is a triangular wave signal, by way of example. The comparator 2117 compares the analog video signal and the pattern signal (1) and outputs a PWM signal (1), which is obtained by pulse-width modulating the pertinent video density.

The PVCLK signal is a clock signal which has a frequency half (or two-thirds, etc.) that of the video signal and a duty ratio of 50%. A pattern generating circuit 2116 generates the analog pattern signal (2) in accordance with the PVCLK signal. In the present embodiment, this signal is a triangular wave signal, by way of example. The comparator 2118 compares the analog video signal and the pattern signal (2) and outputs a PWM signal (2), which is obtained by pulse-width modulating the pertinent video density.

In accordance with a control signal from a CPU 2110, a selector (SEL) 2119 selects and outputs the PWM signal (1) at its A terminal when a line image original is to be reproduced or a screen half-toned output is to be produced. When a half-tone image is reproduced, the PWM signal (2) at the B terminal of selector 2119 is selected and outputted.

This selection can be made at will and various combinations with other processing circuits are conceivable.

It is possible to adopt an arrangement in which a changeover signal from the CPU 2110 is not used as this changeover signal. Specifically, though not shown, well-known image area separating means can be provided for identifying, for every pixel of the video signal, whether the signal belongs to a line image area or a half-tone image area, and this image area separation can be employed as the changeover signal. With such an arrangement, a high-quality image faithful to the image tone of the original is obtained within one image. Thus, the selected PWM signal (1) or (2) is matched with operation of. he transfer material by a gate circuit (GATE) 2120 and inputted to laser driver 2200. The semiconductor laser 2223 is driven at a constant current for a period of time corresponding to the pulse width of the PWM signal, and an electrostatic latent image is formed on the surface of the photosensitive drum 2900.

Fig. 3(A) is a timing chart of the principal signals used in the printing section. The timing chart illustrates examples of the horizontal synchronizing signal BD, blanking signal BLNK, reference clock signal SCLK, clock signals TVCLK, PVCLK for pattern generation, and video clock signal VCLK, etc.

Fig. 3(B) is a block diagram illustrating the details of the synchronizing control circuit section. In Fig. 3(B), a quartz oscillator 2112′ generates a clock signal which is more than four times the frequency of the image clock signal. A synchronizing circuit (SYNC) 2128 outputs an HSYNC signal, VCLK signal and SCLK signal at timings synchronized to the BD signal, ITOP signal and clock, which are externally applied. The frequency divider circuit 2114, to which the SCLK signal is applied outputs the TVCLK signal, which has a period the same as that of the VCLK signal and a duty ratio of 50%, and the PVCLK signal, which has a period twice (or three times, etc.) that of the VCLK signal and a duty ratio of 50%. Though not shown, a blanking signal is formed by a counter which counts a time period shorter than the period of the BD signal reset by the trailing edge of the BD signal.

The PVCLK′ signal in Fig. 3(A) will now be described. The PVCLK′ signal is useful when screen angle control is applied to the video data in a case where screen half-toning processing is not executed (i.e., at the time of ordinary half-tone image playback). This PVCLK′signal is a clock signal having a phase which is, e.g., 1.5 pixels latter than the HSYNC signal. When this is compared with PVCLK signal of the normal phase, it is found to lag by one pixel. In the present embodiment, at the time of, e.g., ordinary half-tone image playback, the PVCLK signal and PVCLK′ signal are used upon being changed over every line or every several lines in the subsidiary scanning direction with respect to the HSYNC signal. For example, when changeover is made every line, this establishes 45° screen angle control.

In Fig. 3(B), the HSYNC signal enters a shift register (SR) 2130 and is shifted by the SCLK signal. The output of each stage of the shift register 2130 is connected to the input termnal of the selector 2131. Meanwhile, a counter circuit (CNT) 2132, upon being reset by the ITOP signal, is preset to count program information from the CPU 2110. The count program information is count sequence information for repeating 2 to 5, 5 to 6, etc., as the counted value output. The counter circuit 2132 counts the HSYNC signal in accordance with this information. For example, counting is performed in the manner 3 → 4 → 5 → 3 → 4 → 5 whenever the HSYNC signal is generated. The counted value is inputted to the selection terminal of a selector 2131. The latter selects and outputs the signal at an input terminal 3 when the counted value is 3, and selects and outputs the signal at input terminal 4 when the counted value is 4. The output of the selector 2131 enters a frequency dividing start terminal of the frequency divider circuit 2114. The latter is not counting since it has already been reset by the HSYNC signal. The frequency divider circuit 2114 starts the frequency-dividing operation at the moment the signal from the selector 2131 arrives. Thus, the PVCLK signal and TVCLK signal which differ in phase can be generated every line.

As for the relationship with the screen angle, let the screen angle 0 be defined as follows:

$$\theta = \tan^{-1} b/a$$

The value of a is decided by the counted value in counter circuit 2132, and the value of b is decided by the count sequence. These are values which can be set at will by the CPU 2110.

⟨Description of Screen Half-toning Processing⟩

In half-toning processing described below, half-toning of the density of image data divided into a predetermined area (e.g., concentration and typification at the central pixel position of pixel density) and optimum screen angle control are performed at a stroke in realtime.

First, the details of the look-up table [LUT (1)] for correcting screen half-toning will be described.

Fig. 7 is a view for describing the conversion characteristic of the LUT (1) of the present embodiment. The Y, M, C video data inputted to the printing section and the ink (or toner) concentration are linearly related. However, when screen half-toning processing, described below, is carried out, the linear relationship is no longer maintained. Accordingly, a density correction is applied to the inputted Y, M, C video data in advance. A first quadrant (I) in Fig. 7 indicates the relationship between input level before correction and ink density. Here the relationship is linear. That is, ink density along the vertical axis is that which prevails when printing is performed using color-separated print images outputted by the apparatus of the embodiment. A second quadrant (II) indicates the relationship between ink density and screen half-toned output density level. A third quadrant (III) indicates the relationship between screen half-toned output density level and corrected input level. A fourth quadrant (IV) incidates the relationship between input level before correction and input level after correction. This gives the conversion characteristic of LUT (1).

If the color-separated print images of the embodiment can construct an ideal screen image, the screen output densities of the third and fourth quadrants can be adopted as the screen density (%).

The actual table information is obtained by measurement, by way of example. For instance, when ink density $D_n$ is obtained as an input level $e_n$ before correction, a screen output density $d_n$ which will become the ink density $D_n$ is obtained. Next, an input level $E_n$ after correction is obtained which will become the screen output density $d_n$. It will thus suffice to fabricate the LUT (1) in such a manner that a corrected output level $E_n$ is obtained with respect to the input level $e_n$ before correction. All conversion levels corresponding to input levels OOH - FFH are thus obtained. When the conversion characteristic is different for every color, the LUT (1) also is fabricated for every color.

Figs. 4(A) - (D) are views for describing screen half-toning processing pattern according to the embodiment. Fig. 4(A) illustrates an example regarding the C data. In Fig. 4(A), numeral 500 denotes one pixel. Each pixel is shown as an array from a starting address (0,0) of one image of data. Numeral 600 denotes a basic cell (a basic pattern for screen half-toning). This is a block unit for screen half-toning (concentrating and typifying pixel density at the density of the position of the central pixel, by way of example) the density within the area (a predetermined area) indicated by the solid lines in the Figure. The basic cell of the C data comprises 13 pixels, for example. The numerals (1 - 13) assigned to the pixels within the basic cell indicate the order of priority, which diminishes progressively from 1 to 13. With data of the same color, the same order of priority is assigned to the other basic cells.

It should be noted that the illustrated order of priority is one example made to conform to the printer characteristics of the embodiment, and that the invention is not limited thereto. Various other modifications are possible.

Screen half-toning processing of the pixel density within the basic cell is performed in accordance with the following equation (screen half-toning computation equation):

(output data of pixel of interest)
= (input data of pixel of interest) x (number of pixels in basic cell) - (order of priority - 1) x FFH

where FFH is the maximum density (H represents hexadecimal notation).

This computation is performed moving the pixel of interest successively in the main scanning (MAIN) and subsidiary scaning (SUB) directions in the Figure. For example, when the pixel of interest is at the location where the order of priority is 11, we have

(output density) = (input density) x 13 - (11-1) x FFH

Since the order of priority is 11, which is low, the subtracted density [(order of priority -1) x FFH] is larger and the density of this pixel position is relatively low. Further, as a result, when (output density) < 0 holds, the output density is clamped at "00H". Conversely, when (output density) > FFH holds, the output density is clamped at "FFH".

Similarly, when the pixel of interest is at the location where the order of priority is 1; we have

(output density) = (input density) x 13 - (1-1) x FFH

Since the order of priority is 1, the substracted density is zero. Thus, pixel concentration is concentrated and typified toward the central pixel position of the basic cell. An original screen image thus screen half-toned has excellent ink spread and is stable.

Numeral 700 denotes a matrix. This illustrates a block unit in which the screen half-toning processing pattern shown is used repeatedly in the main and subsidiary scanning directions. The matrix size of the C data is, e.g, (13 x 13) pixels. As is evident from the drawing, an original image of any size can be processed when a plurality of these matrices are connected in the main and subsidiary scanning directions. According to this embodiment, this matrix pattern is stored in memory utilizing its periodicity, and the abovementioned pattern is repeated and used in realtime, thereby making it possible to conserve the pattern memory and to perform processing at high speed.

The triangle in Fig. 4 indicates the screen angle $\theta$. This screen angle represents the inclination of the alignment of the basic cell 600. When a and b are decided in Fig. 4, the screen angle $\theta$ is decided as follows:

$\theta = \tan^{-1} b/a$

The screen angle given is $\theta = 56.3°$.

Fig. 4(B) illustrates an example of a screen half-toning processing pattern for M data. In Fig. 4-(B), the basic cell 600 comprises 13 pixels and has the same shape as that in Fig. 4(A). Here $\theta = 33.7°$ is given as the screen angle. A comparison of Fig. 4(B) with Fig. 4(A) shows that the basic cell 600 of the M data differs (in phase angle) in terms of the way it starts from the address (0,0). Consequently, the two center pixel positions do not overlap. In other words, the principal density information does not overlap. As a result, neither the C ink nor the M ink is crushed at printing. This assures high-quality, stable printing.

Fig. 4(C) illustrates an example of a screen half-toning processing pattern for BK data. Here the BK data is generated from the C, M, Y data by a well-known method. In Fig. 4(C), the basic cell 600 comprises 10 pixels and the shape thereof differs from that in Figs. 4(A), (B). Though the invention is not limited to this shape, it is suitable in order to give $\theta = 71.6°$ as the screen angle, by way of example. The phase angle from the address (0,0) also differs.

Fig. 4(D) illustrates an example of a screen half-toning processing pattern for Y data. In Fig. 4-(D), the basic cell 600 comprises 10 pixels. Though the invention is not limited to this shape, it is suitable in order to give $\theta = 18.4°$ as the screen angle, by way of example. The phase angle from the address (0,0) also differs.

Fig. 5 is a block diagram of the screen half-toning processing circuit of the embodiment. In Fig. 5, screen half-toning video data (VD) outputted by the LUT (1) is latched in a D-type flip-flop (D F/F) 2301 in synchronism with the RVCLK signal. Upon being reset by the RHSYNC signal, the counter (CNT) 2304 counts the RVCLK signal. That is, main scanning-direction addresses of Figs. 4(A) - (D) are formed. Upon being reset by the ITOP signal, a counter (CNT) 2305 counts the RHSYNC signal. That is, subsidiary scanning-direction addresses of Figs. 4(A) - (D) are formed.

Though not illustrated, count initializing data is set in the counters 2304, 2305 in accordance with the processing color from the CPU 2110, and each counter repeats the counting operation at the counted value corresponding to the initializing data. For example, when the C data or M data is processed, the counting operation is repeated at the respective counted values 0 - 12. When the BK data or Y data is processed, the counting operation is repeated at the respective counted values 0 - 9.

Numeral 2306 denotes a pattern memory (PMEN) which stores the screen half-toning processing patterns (data indicative of the order of priority) of Figs. 4(A) - (D). Thus, the order-of-priority data of any one of the matrices of Figs. 4-(A) - (D) is read out successively by the color selection signals (Y, M, C, BK) from the CPU 2110 and as the main and subsidiary scanning progresses. Numeral 2302 denotes a table memory (TMEN) to which are applied input data indicative of the pixel of interest and the corresponding order-of-priority data, and which delivers output data indicative of the pixel of interest in accordance with the abovementioned screen half-toning computation equation. At such time a table in a case where the number of pixels in the basic cell is 10 or 13 is employed in accordance with the color selection signal from the CPU 2110, in the manner described above. The output data indicative of the pixel of interest thus read is set in the D F/F 2303 in synchronism with the RVCLK signal and is outputted to the circuit of the next stage.

The abovementioned memories 2302, 2306 may be ROM's or RAM's. Instead of adopting a look-up table method relying upon memories, an arrangement can be adopted in which hardware-type arithmetic circuitry is employed.

Fig. 6(A) is a view showing an example of the distribution of screen angles according to the embodiment, Fig. 6(B) is a view showing an example of the distribution of screen angles used in the conventional printing field, and Figs. 6(C) - (H) are views showing examples of moire patterns. Fig. 6-(C) shows a moire with a 10° difference, Fig. 6(D) a moire based on a ripple screen, Fig. 6(E) a moire with a 5° difference, Fig. 6(F) a moire based on a concentric-circle screen, Fig. 6(G) a moire with a 2° difference, and Fig. 6(H) a moire based on a ripple screen + half-tone dot.

In the field of printing technology, (13 x 13) glass fibers can be bundled together, by way of example. Therefore, it is easy to accurately maintain a distributed screen angle at the time of printing. On the other hand, in the present embodiment a laser beam printer is employed, so that irregular rotation of the polygon mirror 2289 and photosensitive drum 2900 must be taken into consideration. That is, an irregularity in the amount of laser irradiation per time is caused by combining both rotational irregularities, and this irregularity in irradiation has an influence at the time that the latent image is formed on the photosensitive drum and, hence, when development is performed. This appears as an irregular shade (irregular pitch) in the output image. When this is considered in correspondence with the screen half-toning processed image, this pitch irregularity may be considered as a high-frequency component having an angle of 0° (main scanning) or 90° (subsidiary scanning). In general, moire appears in a color print image in which the angular difference with the pitch irregularity is small. Consequently, when image formation is carried out at an angle the same as that in the printing method, the M and C components are easy to see as moire with the pitch irregularity. This becomes equivalent to the "moire based on a ripple screen + half-tone dot" of Fig. 6(H). Accordingly, in the present embodiment, the moire is made difficult to see by adopting a screen angle in which the Y component, which is not noticeable with respect to spectral luminous efficiency, is close to 0°. BK originally is a color easy to see. However, with regard to the BK component in the present embodiment, data is corrected in the reading section 100 in such a manner that a low-density area will not be printed as density with respect to the minimum value of each color component. The arrangement, however, is not shown in the drawings. Consequently, since pitch irregularity is irregularity in the amount of light, as mentioned above, there is a characteristic in which light density is easier to see than heavy density. Therefore, moire with pitch irregularity is difficult to see even if an angle is adopted in which black is near 0° or 90°.

Figs. 8(A) through (D) are views illustrating the conversion characteristic of the LUT (2) for the printer output characteristic of the present embodiment. It is necessary that the printer output image be made to conform to the characteristic of the printer used and that the input data level and printer output density have a linear characteristic. For example, in a case where the toner particle diameter is not small enough in comparison with the beam spot diameter, there will be occasions where a maximum of only 32 toner particles will attach even if the output beam is provided with 256 tones. This is disadvantageous since, in essence, only 32 tones will appear. Accordingly, if an area of (2 x 2) dots or, in general, (n x m) dots, is set as the printer output unit and this is considered in terms of the density in the abovementioned area, then linear tone expression of e.g., 32 x 2 = 64 tones, is possible, and expression up to 256 tones can be achieved.

In a case where this is carried out, it will suffice to PWM-convert image data of, e.g., m pixels by a pattern signal (triangular wave) whose period is m times that of the pixel period with regard to the main scanning direction. With regard to the subsidiary scanning direction, it is desired to obtain effects equivalent to those of main scanning regarding n lines. However, equivalent effects cannot be obtained with a system in which identical main scanning is repeated in the subsidiary scanning direction. Accordingly, plural types of tone conversion tables are provided with regard to the subsidiary scanning direction and these tables are used upon being changed over in a predetermined sequence, whereby effects equivalent to those in the main scanning direction can be obtained.

The LUT (2) is such a table and takes into account the overall output characteristic of the laser beam printer of the embodiment. A relationship (EV characteristic) between beam pulse width and photosensitive drum surface potential, and a relationship (VD characteristic) between photosensitive drum surface potential and output image density are considered as laserbeam printr output characteristics. Since the EV characteristic has an approximately linear characteristic, it will be described here as a table for correcting the VD characteristic. The VD characteristic is a characteristic which differs depending upon whether image data screen half-toning processing is performed, the frequency of the pulse-width modulated signal (pattern signal) and the developer used, etc. Consequently, in the present embodiment, a plurality of tables are prepared in advance in accordance with the VD characteristic, and the CPU 2110 selects and uses a table whenever necessary.

Here a case will be described in which the frequency of the pattern signal to the comparators is one-half or one-third that of the video signal frequency, without screen half-toning processing being performed.

Fig. 8(A) is a view illustrating the VD characteristic of the embodiment. The drum surface potential along the horizontal axis indicates a differential potential (contrast potential) between the surface potential of the photosensitive drum and the developing bias potential. Fig. 8(B) is a view showing an example of a characteristic in which the VD characteristic of Fig. 8(A) is linearly converted. That is, the object can be attained by interchanging the horizontal and vertical axes of Fig. 8(A) so that the characteristic table of Fig. 8(B) is obtained. In the present embodiment, however, it is desired to achieve a further improvement in the tonality of the output image (especially the tonality of highlight portions). Accordingly, the conversion tables are used upon being changed over every line or every several lines in accordance with one-half or one-third the pattern signal frequency and at a period of two lines or three lines in the subsidiary scanning direction, thereby linearizing tonality and concentrating the screen half-tone dots.

Fig. 8(C) is a view showing a correction table characteristic of an embodiment used in a case where the pattern signal frequency is one half the video signal frequency. In Fig. 8(C), the table of characteristic ① is such that the output level initially rises to the level FFH at a slope twice that of the curve of Fig. 8(B), after which it is constant until the input level becomes FFH. The table of characteristic ② is such that the level 00H is maintained until the table output of characteristic ① becomes level FFH, after which the characteristic rises to the level FFH at a slope twice that of the curve of Fig. 8(B). In this example, the pattern signal frequency is one half, so that an output density of one dot is formed by two pixels of the video signal. With regard to the subsidary scanning direction also, two lines are adopted as the period and the tables of ① and ② of Fig. 8(C) are used upon being changed over every line. In this way density is made heavier by table ① and lighter by table ②. As a result, an effect is obtained in which an output density of one dot is formed by two lines in the subsidiary scanning direction. It should be noted that the table characteristics are not limited to those of ① and ②.

Fig. 8(D) is a view illustrating a correction table characteristic of an embodiment used in a case where the pattern signal frequency is one-third the video signal frequency. As described above, the VD characteristic depends upon the pattern signal frequency. However, the same VD characteristic is used in this explanation to simply the description. In Fig. 8(D), the table of characteristic ③ is such that it initially rises to the level FFH at a slope three times that of the curve of Fig. 8(B), after which it is constant until the input level becomes FFH. The table of characteristic ④ is such that the level 00H is maintained until the table output of characteristic ③ becomes level FFH, after which the characteristic rises to the level FFH at a slope 1.5 times that of the curve of Fig. 8(B). In this example, the pattern signal frequency is one-third, so that an output density of one dot is formed by three pixels of the video signal. With regard to the subsidary scanning direction also, three lines are adopted as the period and the tables of ③ and ④ of Fig. 8(C) are used upon being changed over every line. For example, changeover is made in the manner ④ → ③ → ④. In this way shading is applied every line and an effect is obtained in which an output density of one dot is formed by three lines in the subsidiary scanning direction. It should be noted that the table characteristics are not limited to those of ③ and ④.

In actuality, the VD characteristic differs depending upon the pattern signal frequency, and the tables of Figs. 8(C), (D) are formed in accordance with the different VD characteristics.

Further, formation of the abovementioned tables is not limited to cases in which the pattern signal frequency is one-half or one-third of the video signal frequency. The tables can be formed in a similar manner with regard to other frequencies as well.

Fig. 9 is a block diagram illustrating the details of the font control circuit of the embodiment. The CPU 2110 applies data to the terminal S of a font ROM (FROM) 2108 to select the font that is to be printed. Main scanning address data indicating the font printing position is latched in a latch circuit (LATCH) 2142, and subsidiary scanning address data is latched in a latch circuit 2148. The address data in the latch circuit 2142 is applied to the Q terminal of a comparator (CMP) 2141, and the address data of the latch circuit 2148 is applied to the Q terminal of a comparator 2147. A counter (CNT) 2140 is reset by the RHSYNC signal and then begins counting the RVCLK signal. In other words, the number of pixels in the main scanning direction is counted. A counter 2146 is reset by the ITOP signal and then begins counting the RHSYNC signal. Thus, the number of pixels in the subsidiary scanning direction is counted.

The pixel number in the counter 2140 enters the P terminal of the comparator 2141. When the relation P = Q is satisfied, the comparator 2141 outputs a logical "1" level at the terminal P=Q. This is the character output position in the main scanning direction. The "1" level is applied to the J terminal of a flip-flop circuit (F/F) 2143 which, in response to the next RVCLK signal, sends an HENB signal to the "1" level. A counter 2145 starts counting the RVCLK signal in synchronism with the "1" level of the HENB signal, and the output of this counter is provided as the main scanning address of the font ROM 2108. A counter 2144 also starts counting the RVCLK signal in synchronism with the "1" level of the HENB signal. When a predetermined number is counted, this counter sends its RC terminal to the logical "1" level, which is inputted to the K terminal of the F/F 2143. In response to the next RVCLK signal, the HENB signal of the F/F 2143 reverts to the logical "0" level. As a result, the counters 2144, 2145 stop counting and the outputs thereof are reset. In accordance with the foregoing, the HENB signal is a signal which turns on every line at the pertinent character position in the main scanning direction.

Meanwhile, the line number in the counter 2146 is applied to the P terminal of the comparator 2147. When the relation P = Q is satisfied, the comparator 2146 outputs a logical "1" level at the terminal P=Q. This is the character output position in the subsidiary scanning direction. The "1" level is applied to the J terminal of a flip-flop circuit (F/F) 2149 which, in response to the next RHSYNC signal, sends a VENB signal to the "1" level. A counter 2151 starts counting the RHSYNC signal in synchronism with the "1" level of the VENB signal, and the output of this counter is provided as the subsidiary scanning address of the font ROM 2108. A counter 2150 also starts counting the RHSYNC signal in synchronism with the "1" level of the VENB signal. When a predetermined number is counted, this counter sends its RC terminal to the logical "1" level, which is inputted to the K terminal of the F/F 2149. In response to the next RHSYNC signal, the VENB signal of the F/F 2149 reverts to the logical "0" level. As a result, the counters 2150, 2151 stop counting and the outputs thereof are reset. In accordance with the foregoing, the VENB signal is a signal which turns on every line at the pertinent character position in the subsidiary scanning direction. The HENB signal and the VENB signal enter an AND gate 2153, which forms a signal SEL at its output side.

Font patterns can thus be combined at any position of an output image. The CPU 2110 is capable of suitably altering the data latched in the latch circuits 2142, 2148 and the font selection data, whereby a plurality of different fonts can be combined at any position of an image.

Fig. 10 is a view showing an example of an output image in which fonts are combined by the font control circuit of the embodiment. In Fig. 10, "#" is a registration mark for positioning, and "M, C, Y, Bk" are color information marks for identifying the respective color print images. The others are the color-separated print images of an original image read by the reader 100.

⟨Flowcharts⟩

Fig. 12 is a flowchart illustrating the operation of the controller 10 of the reading section. This control program is stored in the ROM 10-2. In Fig. 12, a initial display routine is executed at step S1 when power is introduced to the reading section 100. This routine involves processing for, e.g., checking each I/O unit, checking the displays of indicators, initializing the RAM 10-3 and moving the scanning unit to a scanning starting point. Step S2 calls for the system to wait for a state in which a connection is made to the printer controller 2500 via the communication line 24. The connected state is not attained if the communication line 24 is not connected or power is not being supplied to the printing section 2000. If the connected state is verified at step S2, the program proceeds to step S3, at which the system waits for the print (copy) switch of the operating unit 16 to be pressed. When the print switch is pressed, the program proceeds to step S4, at which a print ON command is outputted to the printing section 2000 along with printing mode information. This printing mode information includes whether or not this is the color-separated print image output mode and is outputted in accordance with the instruction given to the operating unit 16. The system waits for the arrival of the ITOP signal from the printing section 2000 at step S5. When the ITOP signal enters at step S5, the program proceeds to step S6, at which the original image is scanned and the video data delivered to the printing section 2000. At this time the selection of the printing mode or the like is applied to the controller 10 from the operating unit 16. The controller 10 transmits this information to the various elements of the controller and to the controller 2500 of the printing section 2000.

When the control is proceeded to step 7, a detection is carried out if a jam has been occured or not. Now, it is assumed that a jam has not been detected. The control proceeds to step S10. Above-mentioned operation is also repeated respectively with regard to each of the remaining colors.

Fig. 13(A) is a flowchart illustrating the operation of the controller 2500 of the printing section. When a print ON command is received from the reading section 100, the program proceeds to step S2200. The output mode of the color-separated print image (the original image for a printing press) is checked at step S2201. If the effective mode is not that for outputting the color-separated print image, the program proceeds to step S2202, at which the image of a color copy or the like is outputted by an ordinary printing sequence. If the color-separated print image output mode is in effect, the 400 line-output look-up tables which prevail at the time of the above-described screen half-toning processing are set in the RAM [LUT(2)] 2106, which is for correcting the printer output characteristic, with regard to each of the colors Y, M, C, BK at step S2203. The 400-line (A-side) input of the selector 2119 of Fig. 2 is selected at step S2204. The look-up tables are set in the RAM [LUT (1)] 2101, which is for screen half-toning processing, with regard to each of the colors Y, M, C, BK at step S2205. The A-side input of the selector 2103 of Fig. 2 is selected at step S2206. This is followed by step S2207, at which the image of the color-separated Y screen image is outputted to a first transfer material in accordance with a processing procedure, described below, then by a step S2208, at which the image of the color-separated M screen image is similarly outputted to a second transfer material, then by a step S2209, at which the image of the color-separated C screen image is similarly outputted to a third transfer material, and then by a step S2210, at which the image of the color-separated BK screen image is similarly outputted to a fourth transfer material.

Fig. 13(B) is a flowchart illustrating the details of a procedure for outputting the color-separated Y print image. The sheet counter for yellow is incremented by "1", at step S2211, that is, the number of sheets, corresponding to the number indicated by the sheet counter, is retained in the printer. The Y-correction table of LUT (2) is selected at step S2212, and the Y screen half-toning processing table of LUT (1) is selected at step S2213. The initializing data for Y is set with respect to the screen half-toning processing circuit 2012 in such a manner that a Y-screen angle is applied to the output image. The necessary data is set in the font control circuit 2109 at step S2115. The necessary data referred to here is, e.g., the registration mark "#" attached for the purpose of registration, the color information mark "Y" indicating the color-separated Y print image, and these output addresses. The image data of the color-separated Y print image is developed by the black (BK) developer 2295 at step S2216 to output the image of the color-separated Y print image. It is checked that the sheet which is transferred and developed is entirely exhausted at step is S2217. If exhausted, one decrement is made to the counter which has been incremented at step S2211. Also, with regard to the other color-separated print images M, C, BK, the respective screen angles are applied, and the image data are developed by the BK developer 2295 along with the registration mark "#" and color information marks "M", "C" and "BK". The images of the respective color-separated print images are outputted.

A sheet counter is also provided respectively with regard to each of colors "M", "C" and "Bk".

Thus each counter holds the number of remaining sheets.

The control illustrated in Fig. 13(A) is applicable to duplicate a plurality of sheets with regard to each of color. Therefore, it may be possible that several sheets for one color may remain in the printer.

In Fig. 10, the image of each color-separated print image is printed in black (BK). However, these can readily be distinguished by the simultaneously printed character marks "Y, M, C, BK". Accurate positioning can be achieved by registering the registration marks "#".

We will now discuss the formation of a mirror image in accordance with the embodiment.

Fig. 18 is a block diagram of the buffer memory 2307. The formation of a mirror image is made possible by inserting the buffer memory 2307 in the stage before the flip-flop circuit 2301. That is, the buffer memory 2307 provides the function of inverting the input of one line of video data from left to right (making a mirror image).

There are provided two line memories (LM) 2312 and 2313 in the buffer memory 2307 of this embodiment. This arrangement enables simultaneous write in/read out in the buffer memory 2307. The flip-flop 2322 controls the read-white operation.

Numeral 2320 denotes an address counter (ACW) for writing data. Numeral 2321 denotes an address counter for reading data (ACR). The horizontal synchronizing signal RHSYNC is inputted to preset terminals of each of the address counters.

With this RHSYNC, value "0" is preset to the writing address counter 2320, the counter starts to count up from the initial set value in synchronism with the arrival of RVCLK. Meanwhile, the last address for one line is set at the reading address counter 2321, which counts down from the address with the arrival of RVCLK.

Numeral 2310, 2311, 2314 and 2315 denotes flip-flops of the open-collection type. The Q output of the flip-flop 2322, being set/reset by the horizontal synchronizing signal RHSYNC, is utilized for selecting the outputs of line memories 2312, 2313 and address counters 2320, 2321. That is, when the output of the AND gate 2317 to the selector (SEL) 2316 is "1", the output of the address counter 2321 is selected and input to the line memory 2312. When the output of the AND gate 2317 is "0", the output of the address counter 2320 for writing is selected.

Where the $\overline{Q}$ output of toggle flip-flop 2322 is "1", the SEL 2316, FF 2311 and 2314 are activated. That is, a video input for the line memory is latched at the FF 2311, and the video input then written into the line memory 2313 at its address designated in the writing address counter (ACW)-2320. This is the manner in which video data is written in the line memory. In the meantime, since the output of FF 2310 is disabled, the data read out from the line memory 2312 is addressed by the address counter 2321, and applied to FF 2314 as its input. Thus, read/write of the line memories are carried out simultaneously.

For instance, if the $\overline{Q}$ output of FF 2322 is "0", the line memory 2312 is utilized to write data therein and the line memory 2313 is simultaneously utilized to read out data therefrom.

As mentioned above, the preset value of the writing address counter 2320 at each arrival of RHSYNC input forms the start address of the a line memory, and the preset value of the reading address counter 2321 at each arrival of RHSYNC forms the last address for the line memory. That is, the video data is written from the start address in the writing mode and read out from the last address in the reading mode. In this manner, the right hand side and the left hand side of the image are reversed in a mirror image. Finally, the electrostatic latent image of this mirror image is produced on the photosensitive drum 2900, and the latent image is developed.

If an overhead project (OHP) transparency is used as the transfer material, a mirror image is formed thereon. Further, if the reversed OHP sheet is used as a negative printing plate, there is no image deterioration due to variations in the thickness of the toner on the transparency. As illustrated in Fig. 18, the preset input of the reading address counter 2321 is the signal from the CPU 2210 and the last address, which have been logically anded via an AND gate 2323. If the output of the CPU 2110 is "0", the preset value "0" is set at the address counter 2321. Thus both address counters 2321 and 2320 start to count from the same address at each arrival of the RHSYNC. That is, if a mirror image is not required, the output of the CPU 2110 must be "0".

Needless to say, the above technology to produce a color mirror image on a transfer material is also applicable to produce a mono color image thereon. This technology can also be applied to ordinary image formation.

⟨Jam control⟩

Fig. 19 indicates one example of a flow chart for a detecting seguence for paper jamming which is performed by the CPU 2110 included in the printer controller 2500 [see Fig. 1(B)].

If a jam is sensed in step S2221, the status of the electrophotographic process, i. e. whether the jammed paper in the paper feedout mode or in image transfer mode, is checked. If paper is in the process of being fed out or in the image transfer mode, the step S2222 calls for the system to wait until such mode is completed.

After completion of feeding out or image transfer, the system is halted (step S2223). Then the control proceeds to step S2224, in which information, such as the occurrence of the jam, the number of unusable sheets and color information of the image to be produced, is delivered to the reader 100 via a serial transmitting line.

At this stage, the reader 100 is at step S7 of checking for jamming. If jamming is detected the printer is advised of the fact as well as the number of sheets unusable due to the jamming and the color information for the sheets (step S8, see Fig. 12). Then the controller waits for a READY signal from the printer 2000 at step S9.

If the jam is rectified (step S2225), step S2226 is carried out to check if any sheets remain at the transfer drum. And if any, such sheets are fed out (step S2227). When the jam is completely rectified, the controller transmits this information to the reader at step S2228.

The control status of the reader 100 returns to step S5 when the jam of the printer 2000 is rectified. This calls for the retransmission to the printer 2000 of information on the number of unusable sheets and color information for these sheets based upon information previously received from said printer. For example, if a cyan printing master remains, the cyan video signal is re-transmitted to the printer and the job continues.

Various techniques exist for counting the number of sheets remaining in the printing process. In particular, since the printing order of the color printing master has been previously fixed, if we subtract the number of sheets which have been fed out from the total number, the remaining number of sheets can be calculated.

It will be appreciated that the screen half-toning is useful in the technical field, in which the video signal is pulse-width modulated and the radiation time is controlled by the pulse-width modulation.

Further, in a case where the video image is produced on a transparent transfer material such as an OHP sheet, it is possible to print thereon a mirror image. When the OHP sheet is used to making printing master, by way of example, the sheet should be turned face down so that the toner image is not directly exposed to the light source. In this manner, fluctuations in the intensity of radiation due to variations in the thickness of the toner are removed. Even if a paper feeding jam occurs in the color-separated output mode, the system ascertains information on the number unusable sheets as well as the color to be printed thereon. After rectifying the paper feeding jam, the system is so controlled as to print enough images to replace the number of sheets rendered unusable and the control proceeds to print the color image in the next turn. Accordingly, the system according to the invention avoids waste and provides a good jam rectification system.

Though a laser beam-type printer is used in the present embodiment, the invention is not limited to this arrangement. It is possible to employ other types of printers, such as an ion flow-type printer, LED printer or LCD printer.

Though the screen angle is made different for every color in the present embodiment, the invention is not limited to this arrangement. Since there are cases where almost no black is used, depending upon the image of the particular original, it is permissible if the same angle is employed for two or more colors.

Though the sequence in which a transfer is made to the transfer materials is "Y → M → C → BK" in the present embodiment, the invention is not limited to this sequence. For example, the sequence "Y → C → M → BK" may be employed.

## Claims

**1.** An image forming apparatus comprising:

tone processing means for tone processing colour separated image data to generate image data for forming images relating to each of a plurality of colour components;

image forming means for automatically forming plural output images on respective recording media, one for each colour, in accordance with the colour separated image data processed by said tone processing means;

wherein each such image formed includes both the image data supplied by the processing means and a specific pattern indicating to which colour component of the colour separated image the formed image relates.

**2.** An apparatus according to claim 1, further comprising pattern signal generating means for generating a signal defining said specific pattern, and pattern combining means for combining said pattern signal with the output image data of the tone processing means.

**3.** An apparatus according to claim 2, wherein said pattern signal generating means includes a font ROM.

**4.** An apparatus according to any preceding claim, wherein said tone processing means comprises modulating means for generating a pulse width modulated signal representing the colour separated image data of each colour.

**5.** An apparatus according to claim 4, further comprising means for selectively applying to said modulating means the colour separated image data and a pattern signal defining said specific pattern.

**6.** An apparatus according to any preceding claim further comprising input means for inputting image data and means for generating from the input image data the colour separated image data for supply to the tone processing means.

**7.** An apparatus according to claim 6 wherein said input means includes means for scanning an original image to generate the input image data.

**8.** An apparatus according to claim 6 or 7, further comprising mode selection means for (i) in a first mode causing the image forming means to combine the colour separated image data of each colour on a single recording medium, thereby to form a single multi-coloured output image, and (ii) in an alternative mode to generate separate monocolour output images for each colour on respective recording media.

**9.** An apparatus according to any preceding claim, wherein said tone processing means includes density converting means for subjecting said colour separated image data of each colour to a density conversion, in accordance with predetermined screen half-toning information.

**10.** An apparatus according to claim 9, wherein said density converting means performs a density conversion in accordance with the screen half-toning information based on the following equation:

$$V_{ij}' = nV_{ij} - r(P_{ij} - 1)$$
$$0 < V_{ij}' < r$$

where

$V_{ij}$ is an input density of each pixel of interest,

$V_{ij}'$ is an output density of each pixel of interest,

n is the number of pixels in a predetermined area,

r is maximum density, and

$P_{ij}$ is a priority weighting coefficient.

**11.** An apparatus according to claim 10, wherein said weighting coefficient imparts a generally higher priority to pixels which are centrally located within said predetermined area.

**12.** An apparatus according to claim 9, 10 or 11 wherein said density converting means does not perform a density conversion on the specific pattern.

**13.** An apparatus according to claim 9, 10, 11 or 12 wherein said density converting means performs a density conversion in order to concentrate dots and to define an effective screen angle for the colour-separated image.

**14.** An apparatus according to any preceding claim, wherein said image forming means forms firstly a yellow colour image.

**15.** An apparatus according to any preceding claim further comprising correcting means for correcting a density characteristic of the formed image.

**16.** An apparatus according to any preceding claim further comprising means for reflecting the image data to form a mirror image.

**Patentansprüche**

**1.** Bilderzeugungsgerät mit:
einer Farbabstufungs-Bearbeitungseinrichtung zum Bearbeiten der Abstufung farbseparierter Bilddaten, um dadurch Bilddaten zum Erzeugen von Bildern entsprechend jeder einer Vielzahl von Farbkomponenten zu liefern;
einer Bilderzeugungseinrichtung zum automatischen Erzeugen mehrerer, nach Farben getrennter, Ausgabebilder auf entsprechenden Aufzeichnungsmedien, entsprechend den von der Farbabstufungs-Bearbeitungseinrichtung bearbeiteten farbseparierten Bilddaten;
wobei jedes derart erzeugte Bild die von der Bearbeitungseinrichtung zugeführten Bilddaten und ein spezifisches Muster enthält, das angibt, welcher Farbkomponente des farbseparierten Bilds das erzeugte Bild zuzuordnen ist.

**2.** Gerät nach Anspruch 1, das weiterhin eine Mustersignalerzeugungseinrichtung zum Erzeugen eines das spezifische Muster definierenden Signals und eine Musterverbindungseinrichtung zum Verbinden des Musters mit den Ausgangsbilddaten der Farbabstufungs-Bearbeitungseinrichtung enthält.

**3.** Gerät nach Anspruch 2, wobei die Mustersignalerzeugungseinrichtung einen Schrifttypen-Festspeicher (ROM) enthält.

**4.** Gerät nach einem der vorstehenden Ansprüche, wobei die Farbabstufungs-Bearbeitungseinrichtung eine Modulationseinrichtung zum Erzeugen eines die farbseparierten Bilddaten jeder Farbe repräsentierenden pulsweitenmodulierten Signals umfaßt.

**5.** Gerät nach Anspruch 4, das weiterhin eine Einrichtung umfaßt, die der Modulationseinrichtung wahlweise die farbseparierten Bilddaten und ein das spezifische Muster definierendes Mustersignal zuführt.

**6.** Gerät nach einem der vorstehenden Ansprüche, das weiterhin eine Eingabeeinrichtung zum Eingeben von Bilddaten und eine Einrichtung zum Erzeugen von, der Farbabstufungs-Bearbeitungseinrichtung zuzuführenden, farbseparierten Bilddaten aus den Eingangsbilddaten umfaßt.

**7.** Gerät nach Anspruch 6, wobei die Eingabeeinrichtung eine Einrichtung zum Abtasten eines Originalbilds enthält, um dadurch die Eingangsbilddaten zu erzeugen.

**8.** Gerät nach Anspruch 6 oder 7, das weiterhin eine Betriebsart-Wähleinrichtung umfaßt, die (i) in einer ersten Betriebsart die Bilderzeugungseinrichtung veranlaßt, die farbseparierten Bilddaten jeder Farbe auf einem einzigen Aufzeichnungsmedium zusammenzufügen und somit ein einziges mehrfarbiges Ausgabebild zu erzeugen, und (ii) in einer alternativen Betriebsart separate, einfarbige Ausgabebilder für jede Farbe auf entsprechenden Ausgabemedien erzeugt.

**9.** Gerät nach einem der vorstehenden Ansprüche, in dem die Farbabstufungs-Bearbeitungseinrichtung eine Dichte-Wandlungseinrichtung umfaßt, die die farbseparierten Bilddaten jeder Farbe gemäß den vorbestimmten Raster-Grauwert-Informationen einer Dichte-Wandlung unterzieht.

**10.** Gerät nach Anspruch 9, in dem die Dichte-Wandlungseinrichtung eine Dichte-Wandlung entsprechend den Raster-Grauwert-Informationen durchführt, die auf der folgenden Gleichung beruhen:

$$Vij' = n * Vij - r * (Pij - 1)$$
$$0 < Vij' < r$$

wobei
Vij eine Eingabedichte eines jeden in Betracht kommenden Pixels,
Vij' eine Ausgabedichte eines jeden in Betracht kommenden Pixels,

n die Anzahl der Pixel in einem vorbestimmten Gebiet,

r die maximale Dichte, und

Pij einen Prioritäts-Gewichtungs-Koeffizient kennzeichnet.

**11.** Gerät nach Anspruch 10, wobei der Gewichtungs-Koeffizient innerhalb des vorbestimmten Gebiets zentral angeordneten Pixeln eine generell höhere Priorität verleiht.

**12.** Gerät nach einem der Ansprüche 9, 10 oder 11, wobei die Dichte-Wandlungseinrichtung keine Dichte-Wandlung des spezifischen Muster durchführt.

**13.** Gerät nach einem der Ansprüche 9, 10, 11 oder 12, wobei die Dichte-Wandlungseinrichtung eine Dichte-Wandlung derart durchführt, daß für das farbseparierte Bild Punkte konzentriert werden und ein wirkungsvoller Rasterwinkel definiert wird.

**14.** Gerät nach einem der vorstehenden Ansprüche, wobei das Bilderzeugungsgerät zuerst ein gelbes Farbbild erzeugt.

**15.** Gerät nach einem der vorstehenden Ansprüche, das weiterhin eine Korrektureinrichtung zum Korrigieren einer Dichte-Charakteristik des erzeugten Bilds umfaßt.

**16.** Gerät nach einem der vorstehenden Ansprüche, das weiterhin eine Einrichtung zum Spiegeln der Bilddaten umfaßt, um dadurch ein Spiegelbild zu erzeugen.

## Revendications

**1.** Appareil de formation d'images comprenant:

un moyen de traitement des nuances pour traiter les nuances de données d'images à couleurs séparées pour générer des données d'images permettant de former des images correspondant à chacune d'un ensemble de composantes de couleurs;

un moyen de formation d'images pour former automatiquement plusieurs images de sortie sur des supports d'enregistrement respectifs, à raison d'une par couleur, selon les données d'images à couleurs séparées traitées par ledit moyen de traitement des nuances;

dans lequel chacune de ces images formées comprend à la fois les données d'images fournies par le moyen de traitement et un motif spécifique indiquant à quelle composante de couleur de l'image à couleurs séparées l'image formée correspond.

**2.** Appareil selon la revendication 1, comprenant en outre un moyen générateur de signal de motif pour générer un signal définissant ledit motif spécifique, et un moyen de combinaison de motif pour combiner ledit signal de motif aux données d'images de sortie du moyen de traitement des nuances.

**3.** Appareil selon la revendication 2, dans lequel ledit moyen générateur de signal de motif comporte une ROM de polices.

**4.** Appareil selon l'une quelconque des revendications précédentes, dans lequel ledit moyen de traitement des nuances comprend un moyen de modulation pour générer un signal modulé en largeur d'impulsions représentant les données d'images à couleurs séparées de chaque couleur.

**5.** Appareil selon la revendication 4, comprenant en outre un moyen pour appliquer sélectivement audit moyen de modulation les données d'images à couleurs séparées et un signal de motif définissant ledit motif spécifique.

**6.** Appareil selon l'une quelconque des revendications précédentes, comprenant en outre un moyen d'entrée pour entrer des données d'images et un moyen pour générer à partir des données d'images d'entrée les données d'images à couleurs séparées destinées à être fournies au moyen de traitement des nuances.

**7.** Appareil selon la revendication 6, dans lequel ledit moyen d'entrée comporte un moyen pour balayer une image originale permettant de générer les données d'images d'entrée.

**8.** Appareil selon la revendication 6 ou 7, comprenant en outre un moyen de sélection de mode pour que (i) dans un premier mode, le moyen de formation d'images combine les données d'images à couleurs séparées de chaque couleur sur un seul support d'enregistrement, afin de former ainsi une image de sortie multicolore unique, et que (ii) dans un autre mode, il génère des images de sortie monocolores séparées pour chaque couleur, sur des supports d'enregistrement respectifs.

**9.** Appareil selon l'une quelconque des revendications précédentes, dans lequel ledit moyen de traitement des nuances comporte un moyen de conversion de densité pour soumettre lesdites données d'images à couleurs séparées de chaque couleur à une conversion de densité, selon des informations de tramage prédéterminées.

**10.** Appareil selon la revendication 9, dans lequel ledit moyen de conversion de densité effectue une conversion de densité selon les informations de tramage en faisant appel à l'équation suivante:

$$Vij' = nVij - r(Pij - 1)$$
$$0 < Vij' < r$$

où
Vij est une densité d'entrée de chaque pixel considéré,
Vij' est une densité de sortie de chaque pixel considéré,
n est le nombre de pixels dans une zone prédéterminée,
r est la densité maximale, et
Pij est un coefficient de pondération de priorité.

**11.** Appareil selon la revendication 10, dans lequel ledit coefficient de pondération confère une priorité généralement plus élevée à des pixels qui sont situés au centre de ladite zone prédéterminée.

**12.** Appareil selon la revendication 9, 10 ou 11, dans lequel ledit moyen de conversion de densité n'effectue pas de conversion de densité sur le motif spécifique.

**13.** Appareil selon la revendication 9, 10, 11 ou 12, dans lequel ledit moyen de conversion de densité effectue une conversion de densité pour concentrer des points et pour définir un angle de trame effectif pour l'image à couleurs séparées.

**14.** Appareil selon l'une quelconque des revendications précédentes, dans lequel ledit moyen de formation d'images forme en premier lieu une image de couleur jaune.

**15.** Appareil selon l'une quelconque des revendications précédentes, comprenant en outre un moyen de correction pour corriger une caractéristique de densité de l'image formée.

**16.** Appareil selon l'une quelconque des revendications précédentes, comprenant en outre un moyen pour réfléchir les données d'images de façon à former une image réfléchie.

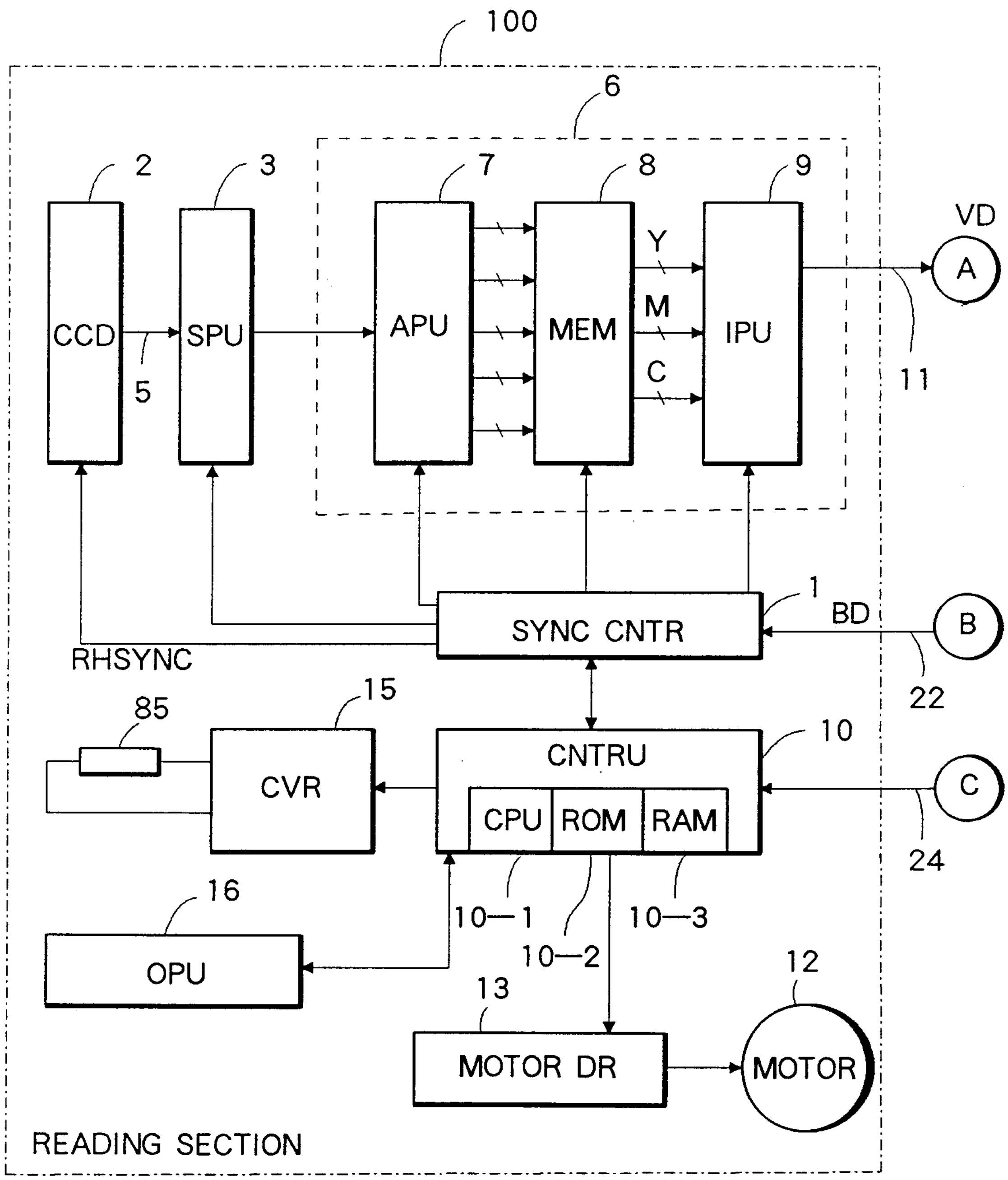
100
6
2
3
7
8
9
VD
CCD
SPU
APU
MEM
IPU
Y
M
C
A
5
11
1
BD
SYNC CNTR
B
RHSYNC
22
85
15
10
CVR
CNTRU
CPU
ROM
RAM
C
24
16
10—1
10—3
10—2
OPU
12
13
MOTOR DR
MOTOR
READING SECTION

FIG. 1 (A)

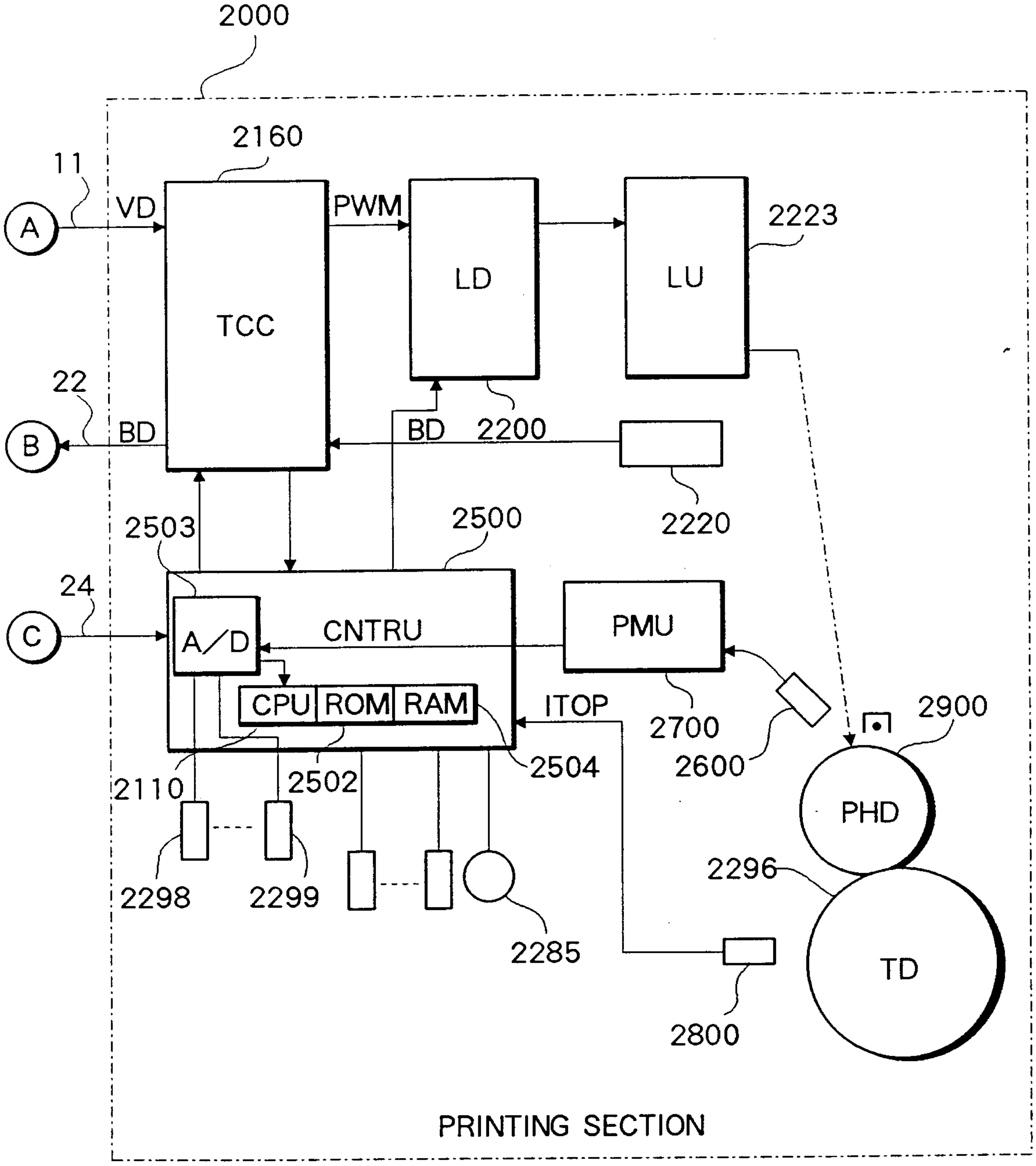
2000
2160
11
VD
PWM
A
TCC
LD
LU
2223
22
B
BD
BD
2200
2220
2503
2500
24
C
A/D
CNTRU
PMU
CPU
ROM
RAM
ITOP
2700
2900
2600
2504
2110
2502
PHD
2298
2299
2296
2285
TD
2800
PRINTING SECTION

FIG. 1 (B)

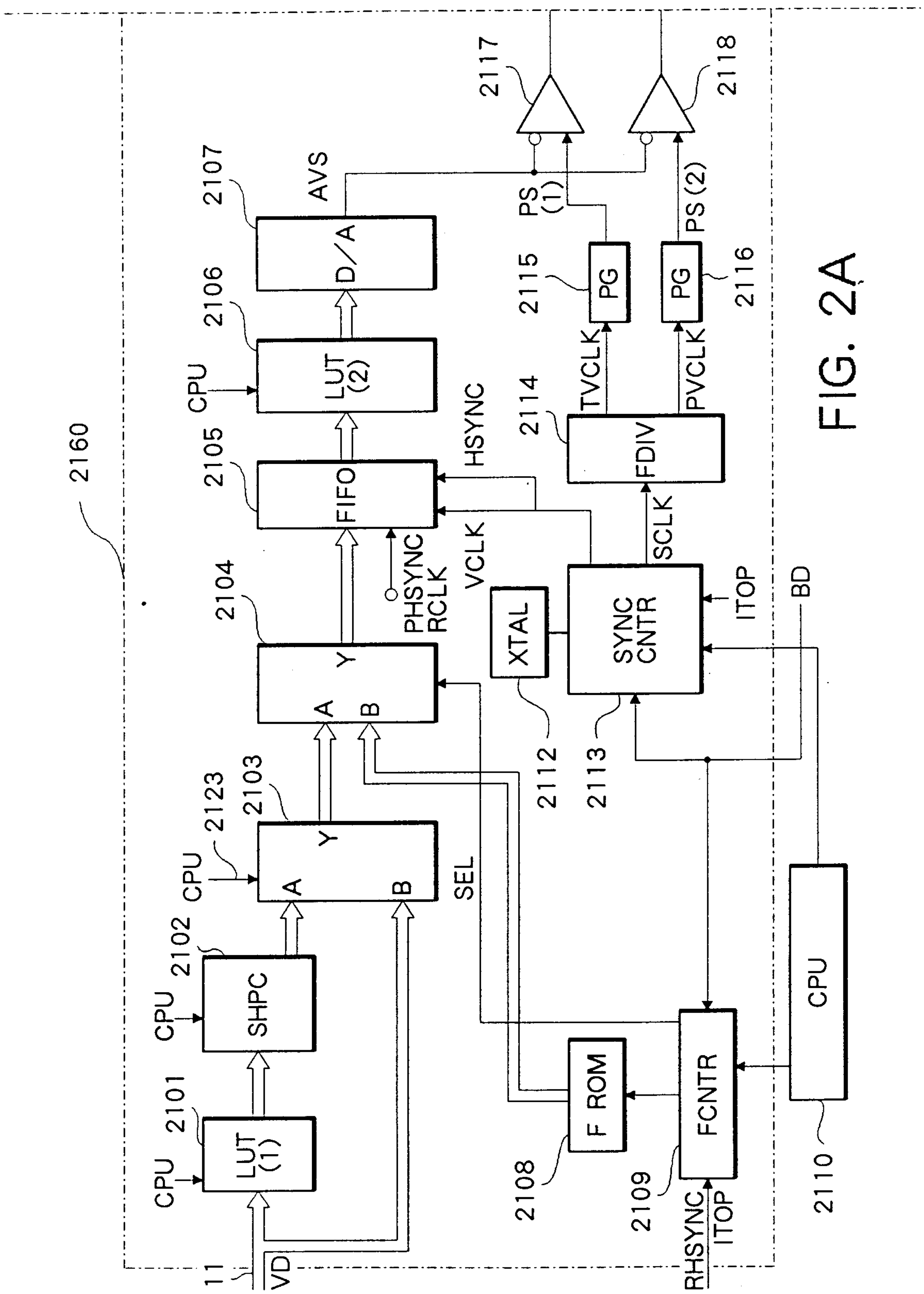
2160
2101
LUT (1)
CPU
2102
SHPC
CPU
2123
2103
CPU
A
Y
B
SEL
2104
A
B
Y
2105
FIFO
PHSYNC
RCLK
VCLK
HSYNC
2106
LUT (2)
CPU
2107
D/A
AVS
2117
2118
PS (1)
PS (2)
2115
PG
2116
PG
TVCLK
PVCLK
2114
FDIV
SCLK
2113
SYNC CNTR
ITOP
BD
2112
XTAL
2108
F ROM
2109
FCNTR
RHSYNC
ITOP
2110
CPU
11
VD

FIG. 2A

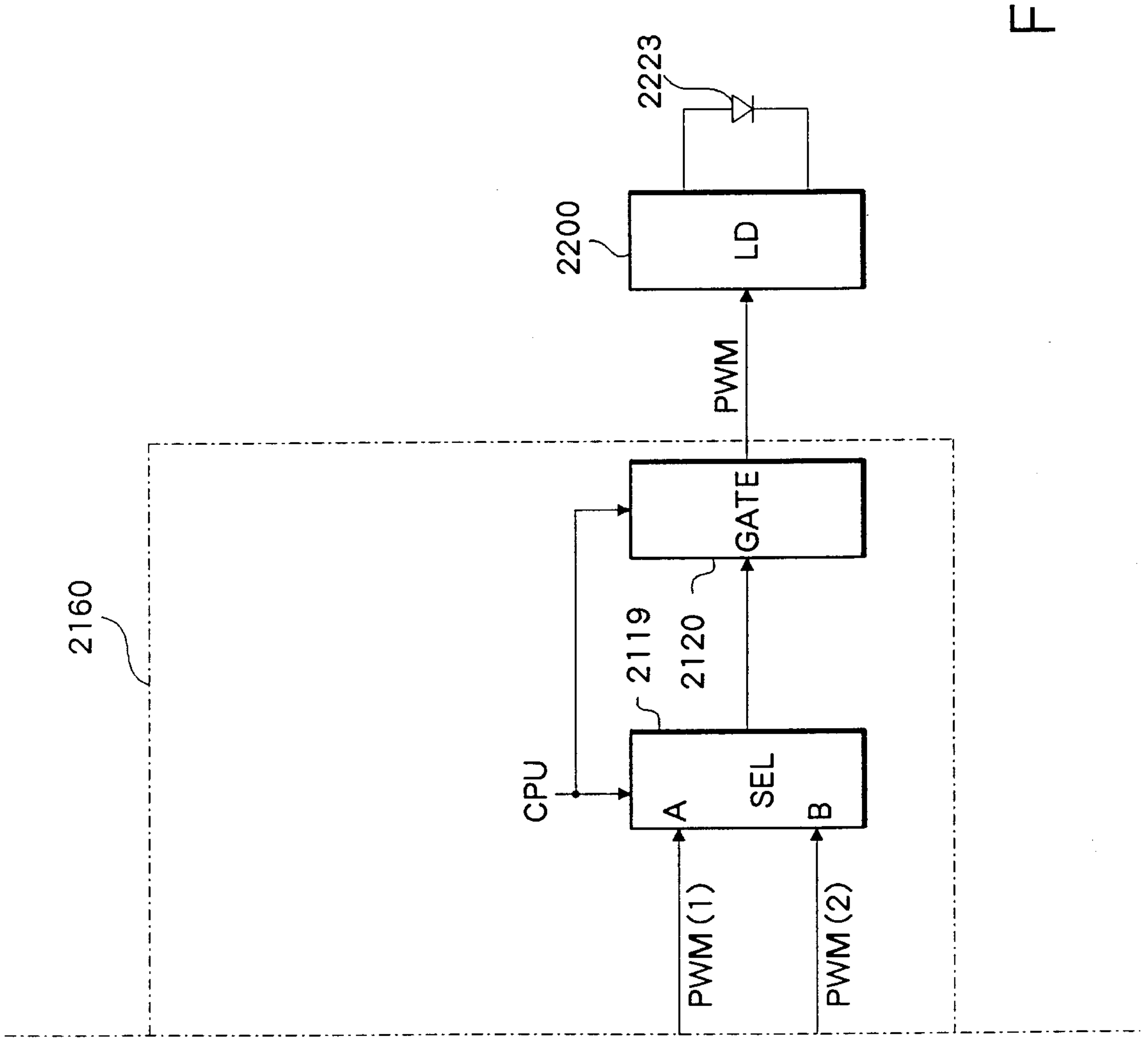


FIG. 2B

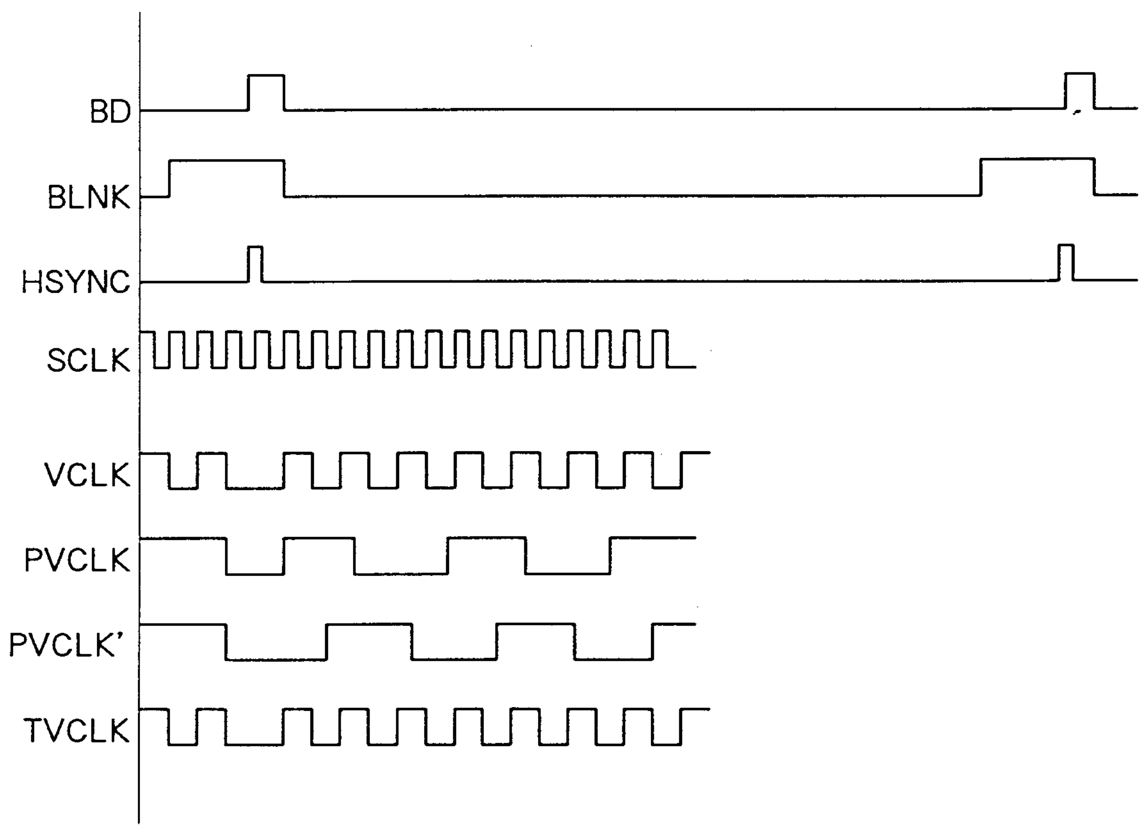


FIG. 3 (A)

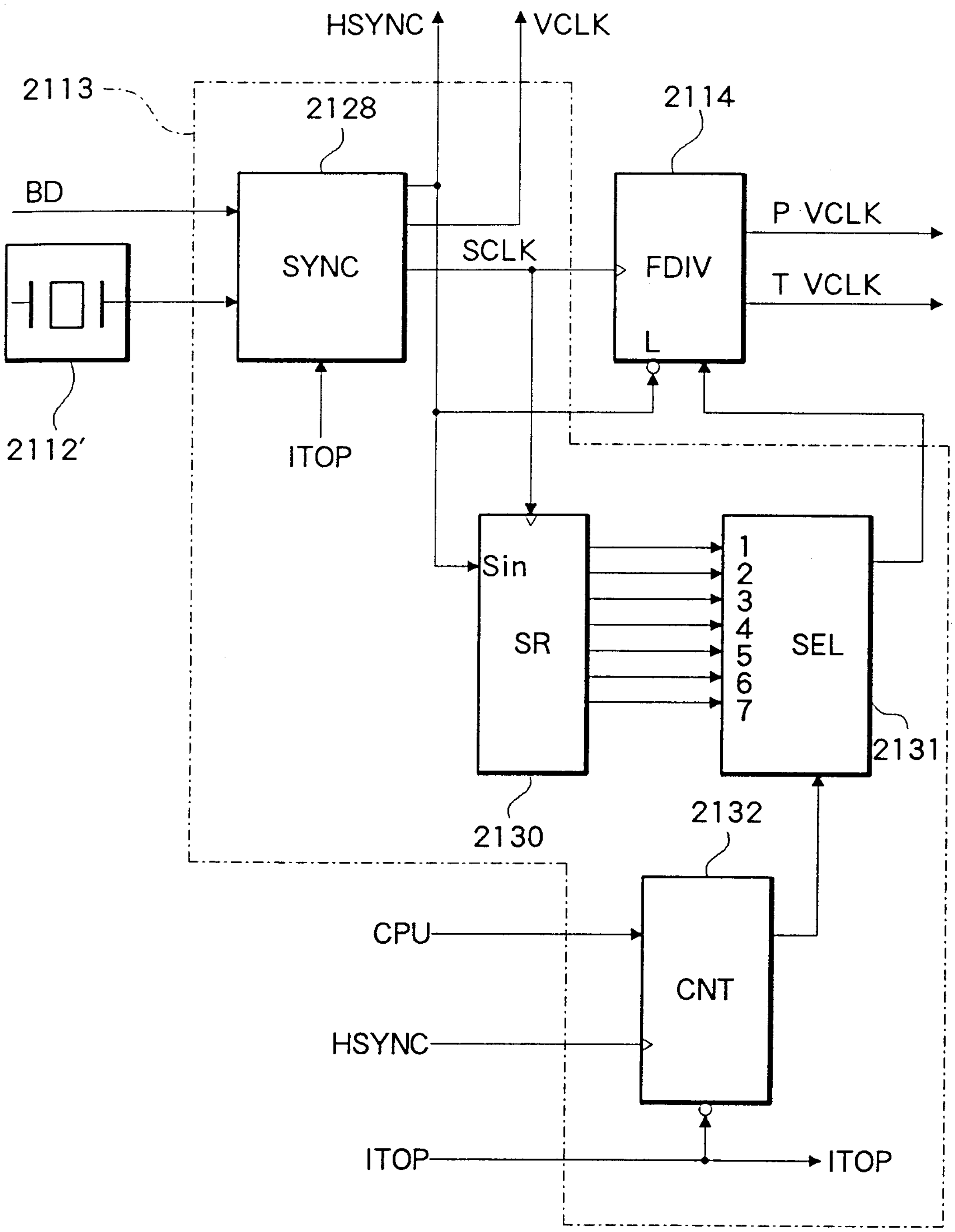
HSYNC
VCLK
2113
2128
2114
BD
SYNC
SCLK
FDIV
P VCLK
T VCLK
L
2112'
ITOP
Sin
SR
1
2
3
4
5
6
7
SEL
2131
2130
2132
CPU
CNT
HSYNC
ITOP
ITOP

FIG. 3 (B)

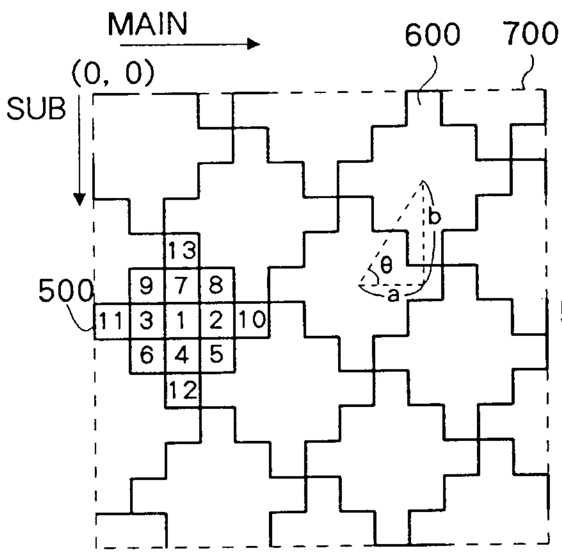


Cyan (θ=56.3°)

FIG. 4 (A)

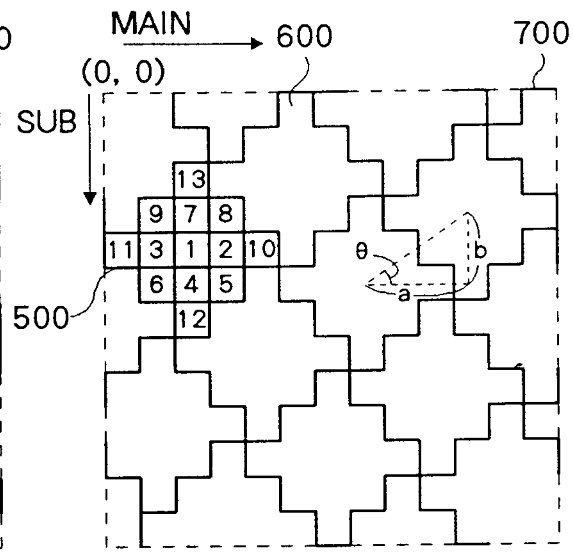


Magenta (θ=33.7°)

FIG. 4 (B)

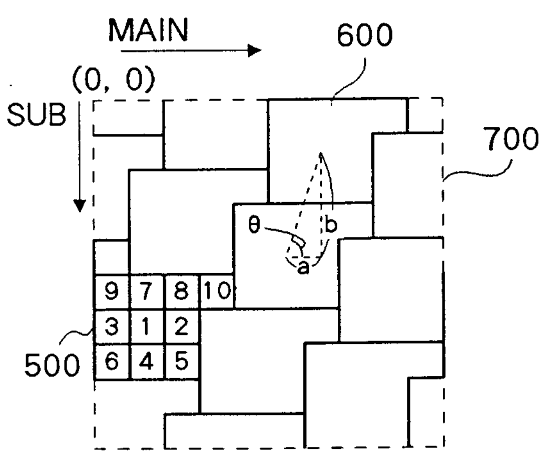


Black (θ=71.6°)

FIG. 4 (C)

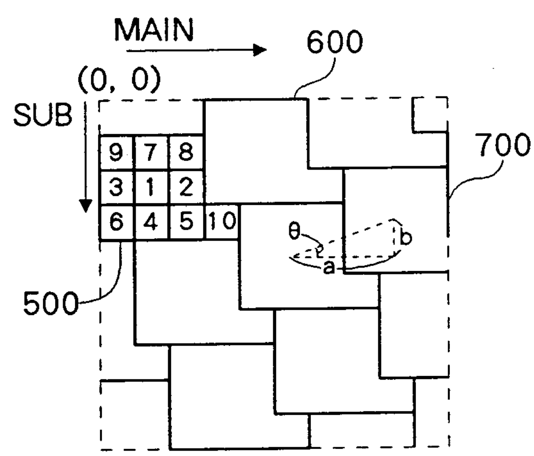


Yellow (θ=18.4°)

FIG. 4 (D)

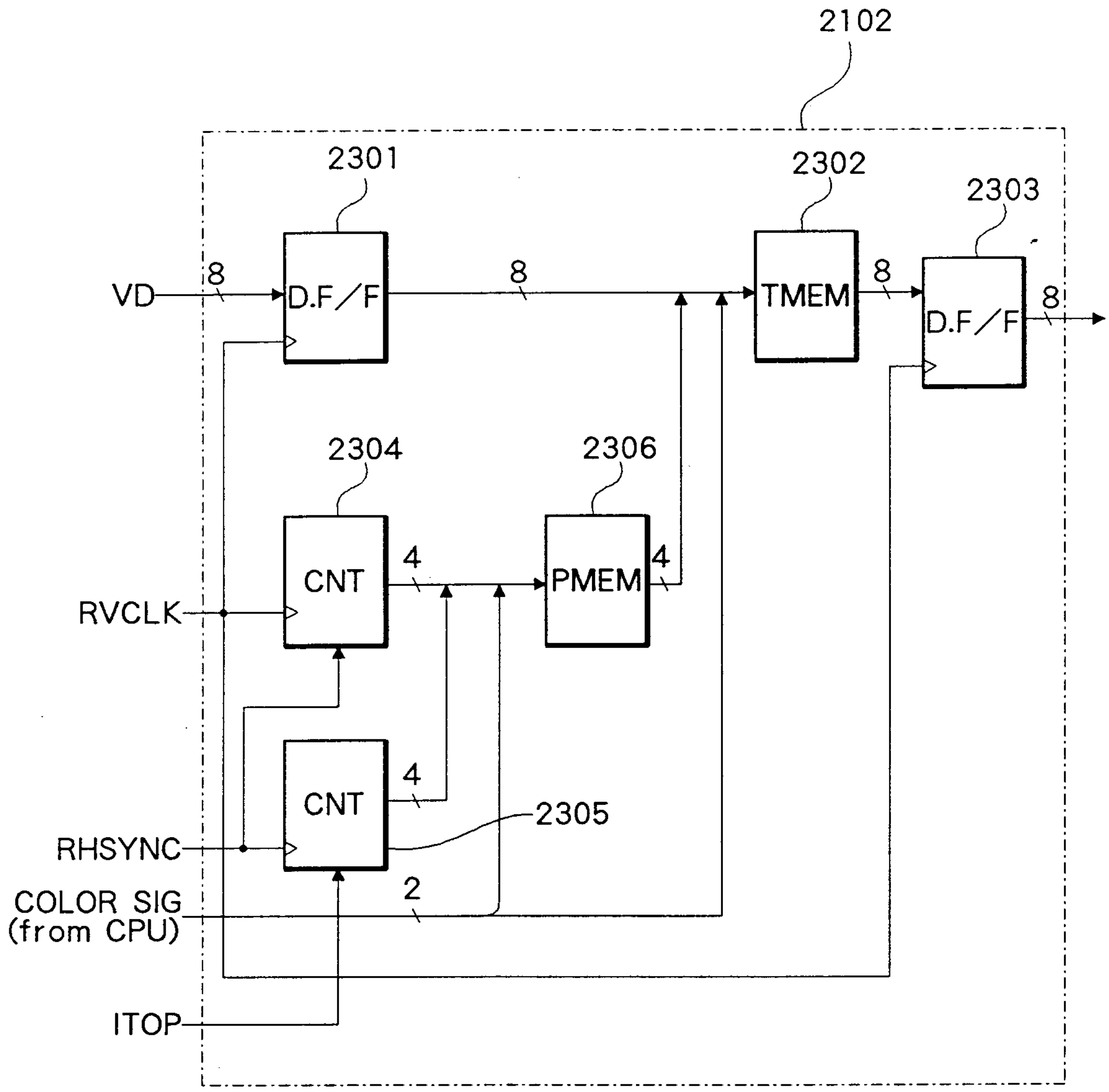
2102
2301
2302
2303
VD
8
D.F／F
8
TMEM
8
D.F／F
8
2304
2306
CNT
4
PMEM
4
RVCLK
CNT
4
2305
RHSYNC
COLOR SIG
(from CPU)
2
ITOP

FIG. 5

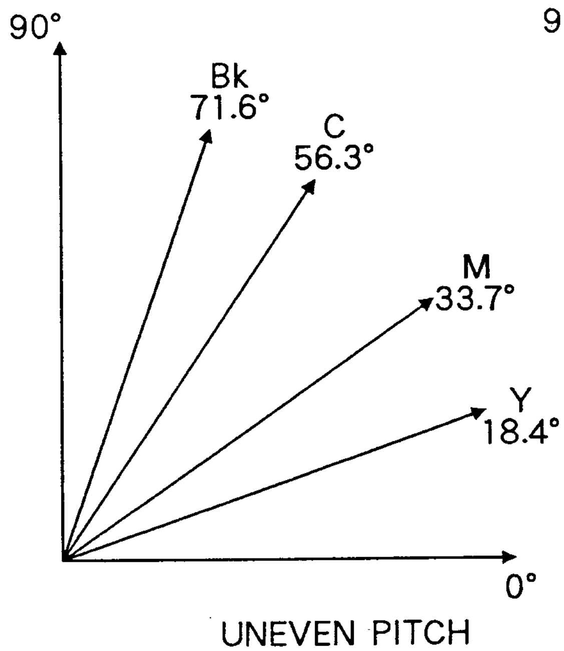
90°
Bk
71.6°
C
56.3°
M
33.7°
Y
18.4°
0°
UNEVEN PITCH

FIG. 6 (A)

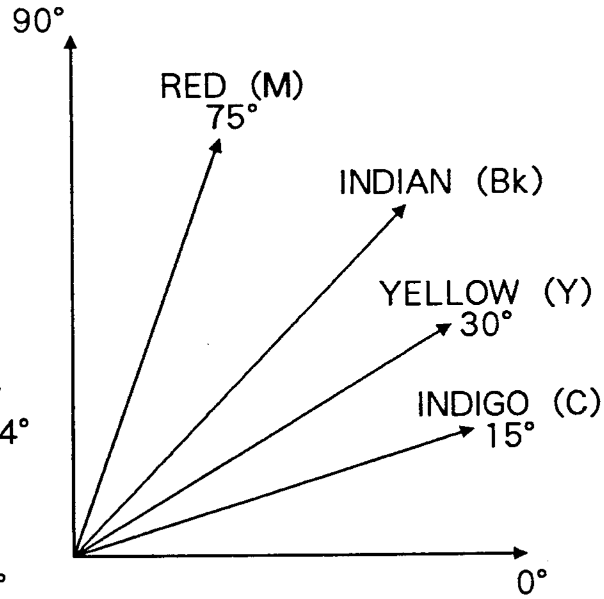
90°
RED (M)
75°
INDIAN (Bk)
YELLOW (Y)
30°
INDIGO (C)
15°
0°

FIG. 6 (B)

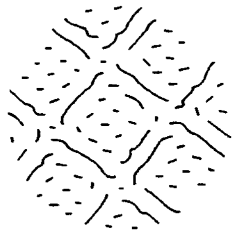

FIG. 6 (C)

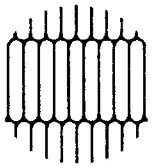

FIG. 6 (D)

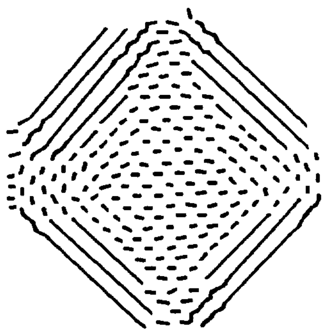

FIG. 6 (E)

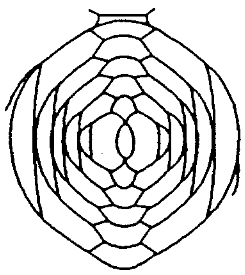

FIG. 6 (F)

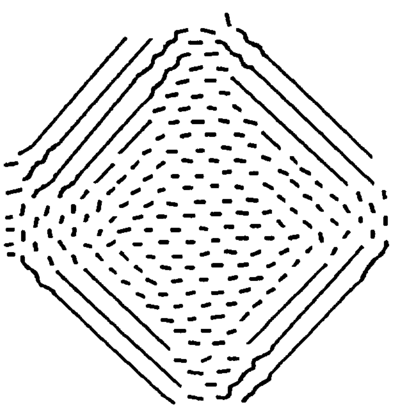

FIG. 6 (G)

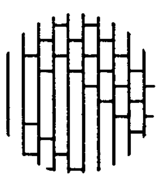

FIG. 6 (H)

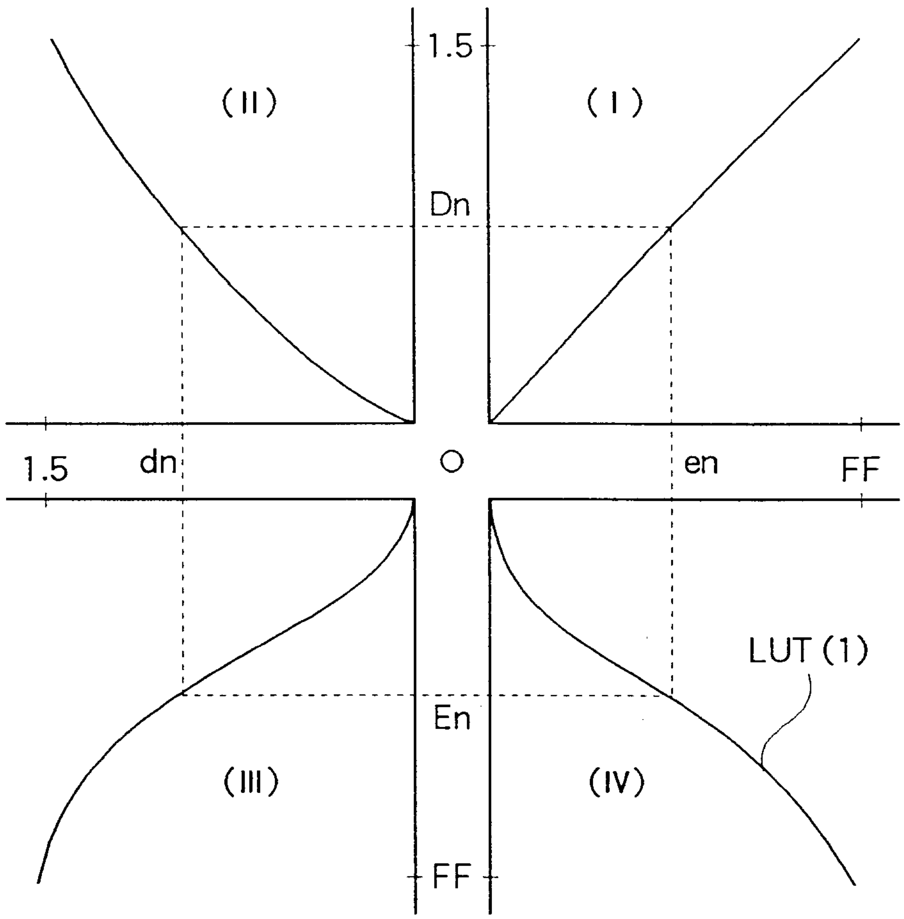


FIG. 7

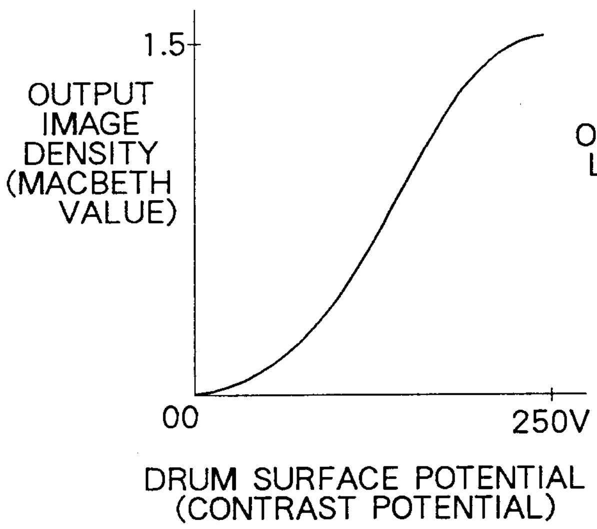


FIG. 8 (A)

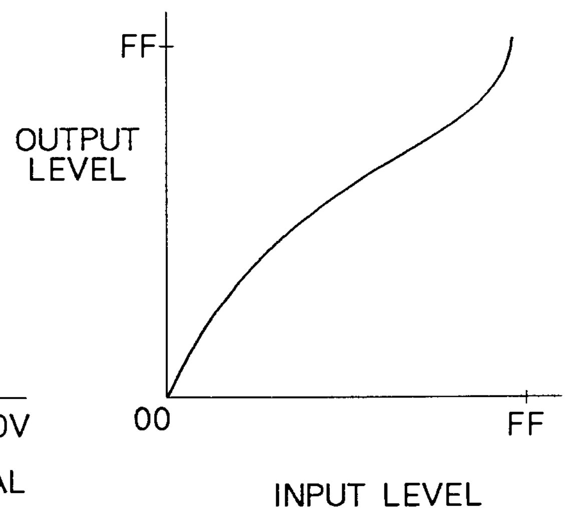


FIG. 8 (B)

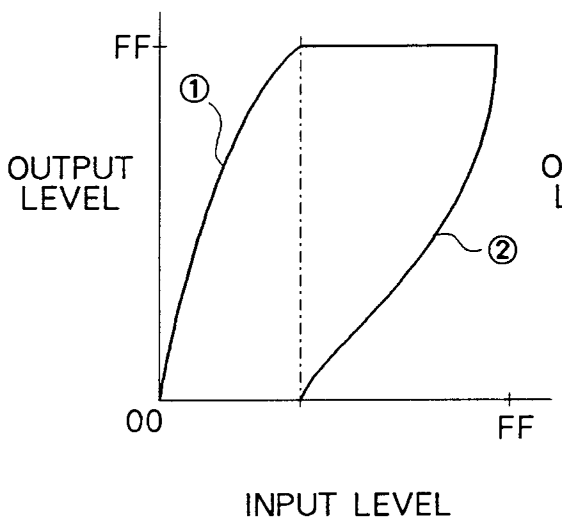


FIG. 8 (C)

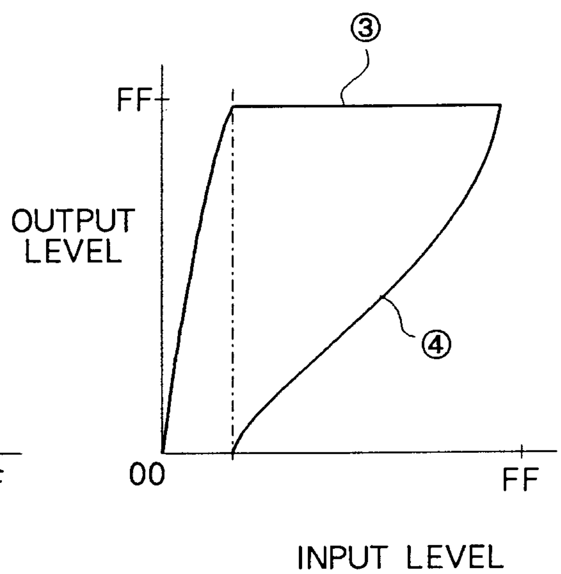


FIG. 8 (D)

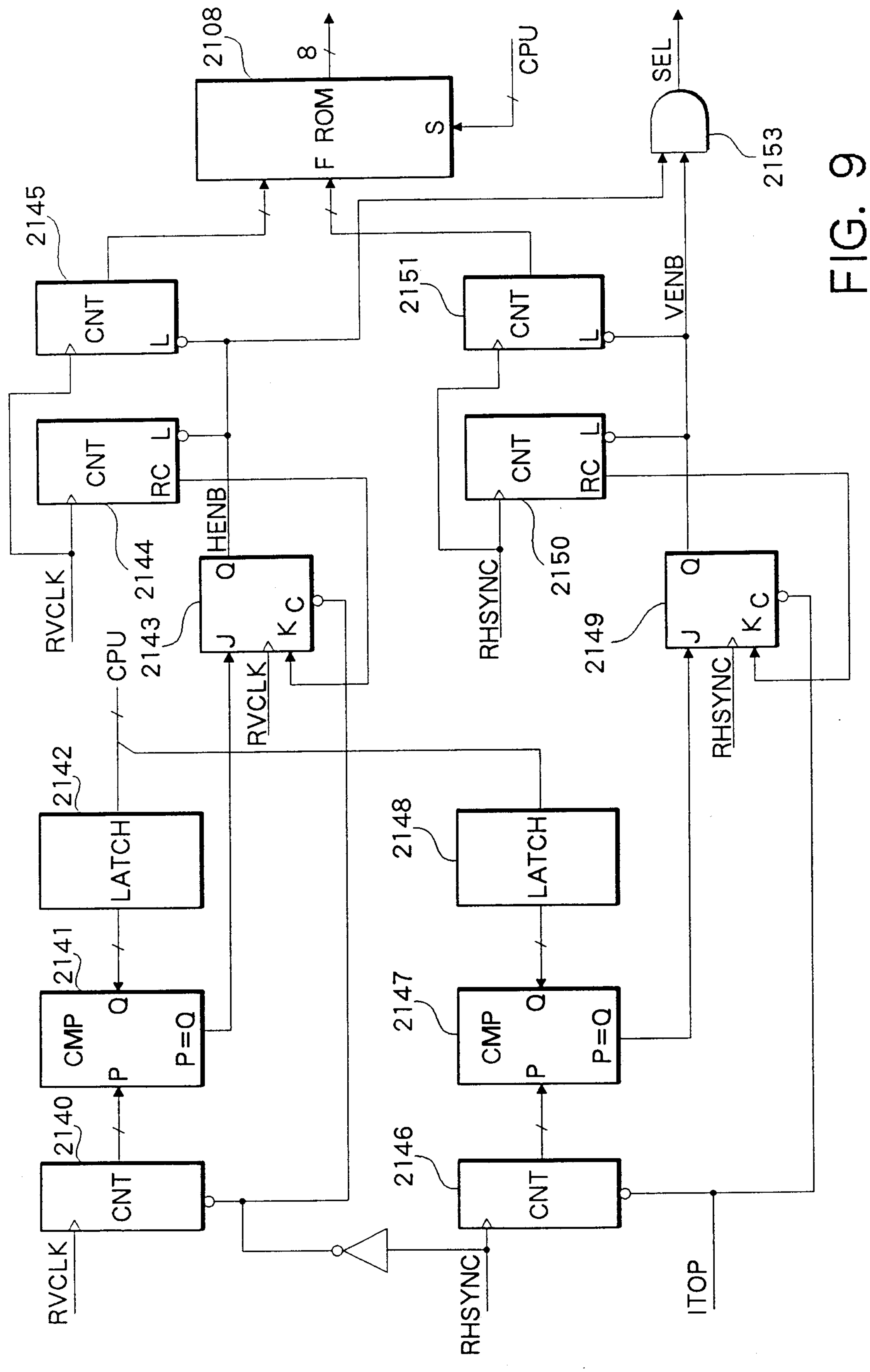

2108
8
CPU
F ROM
S
SEL
2153
2145
CNT
L
2151
VENB
RVCLK
CNT
RC
L
2144
HENB
2143
J
K
C
Q
CPU
RHSYNC
2150
2149
2142
LATCH
2148
2141
CMP
P
Q
P=Q
2147
2140
2146
ITOP


FIG. 9

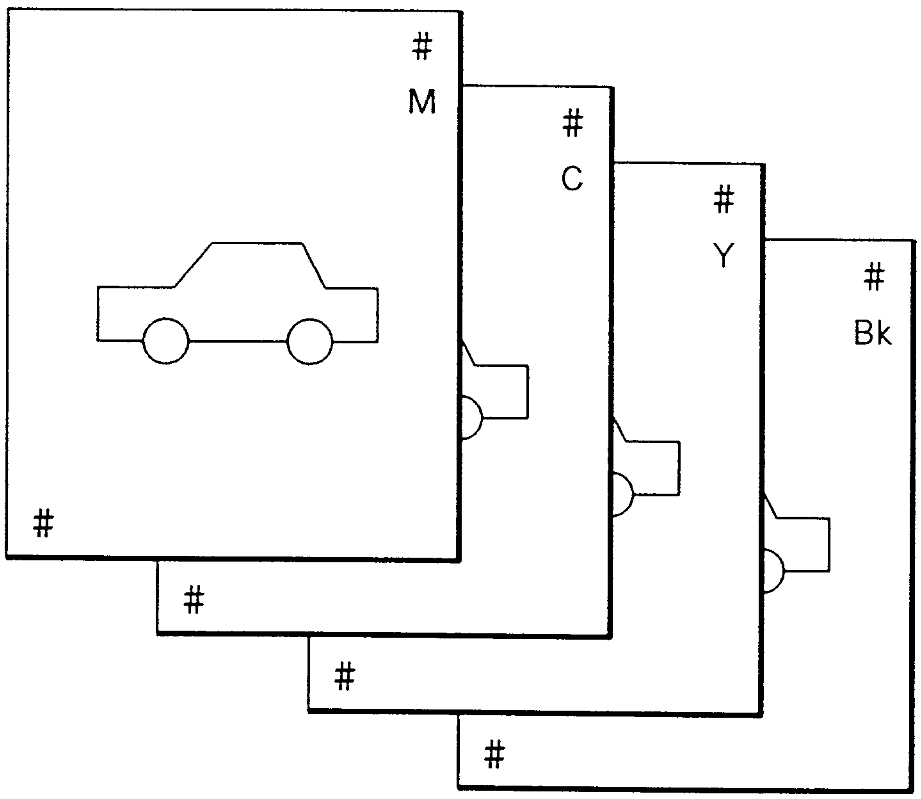


FIG. 10

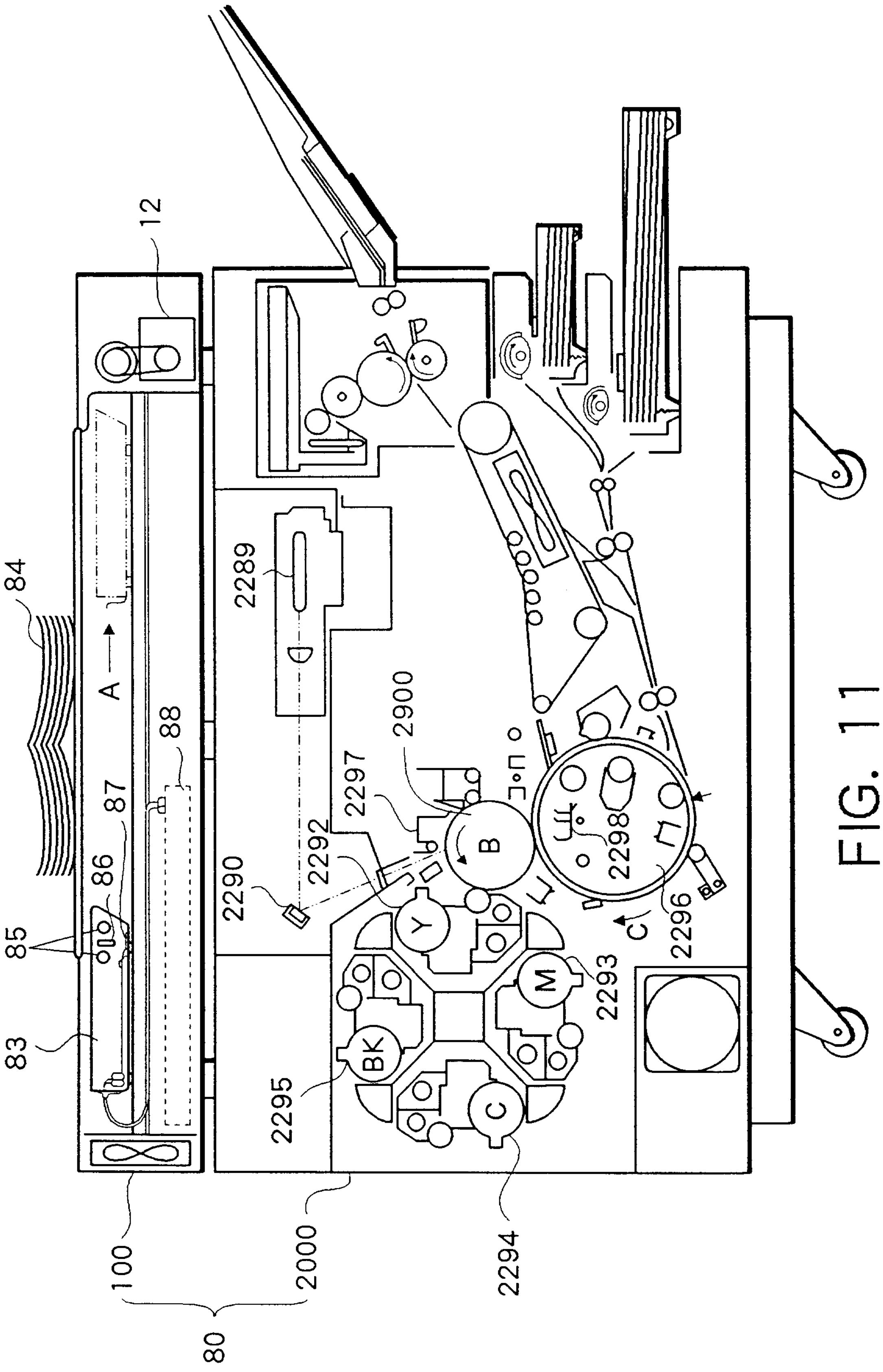
12
84
85
83
86
87
88
A
2289
2900
2297
2292
2290
B
Y
M
BK
C
2293
2295
2294
2298
2296
C'
100
2000
80

FIG. 11

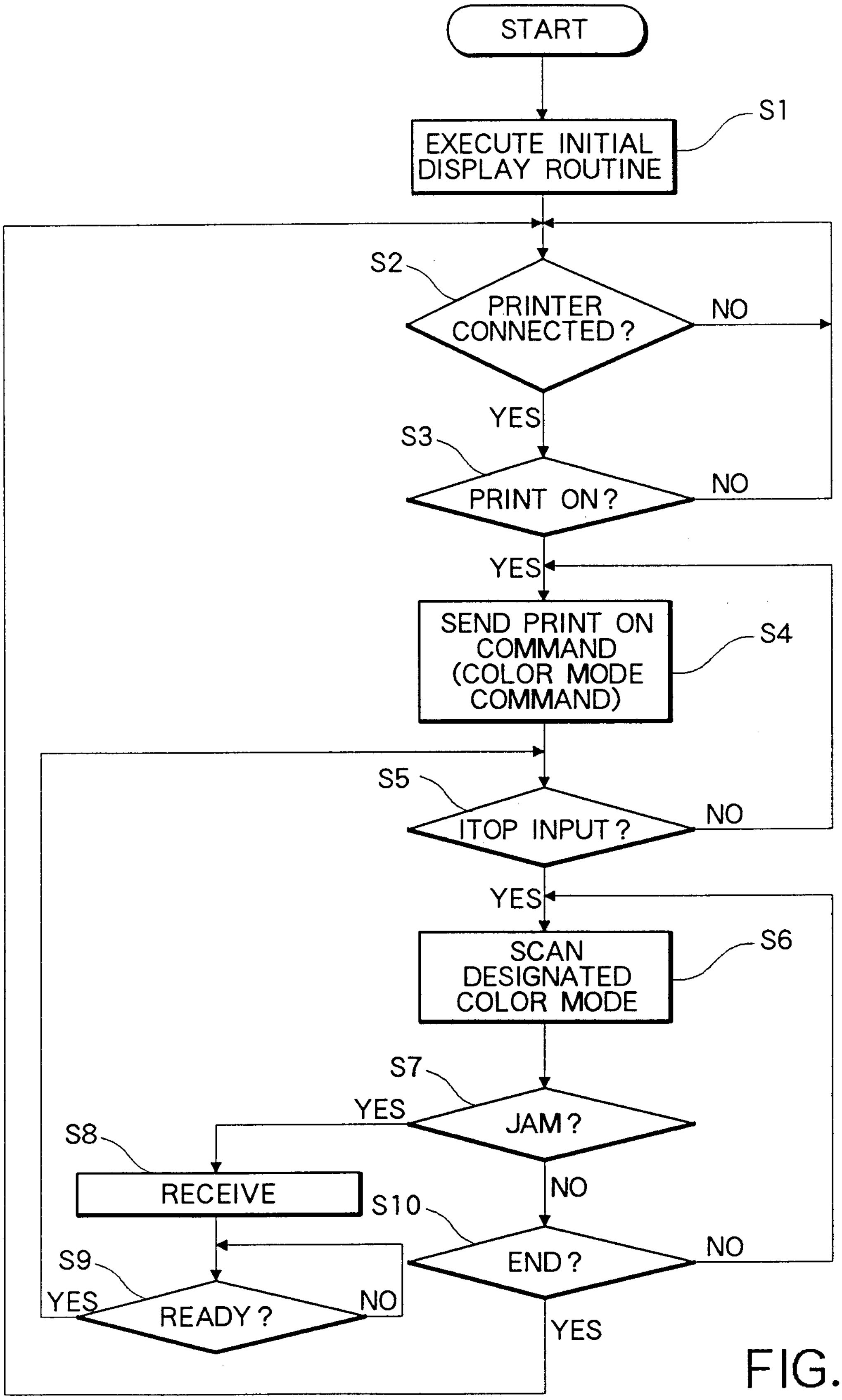
START
EXECUTE INITIAL DISPLAY ROUTINE
S1
S2
PRINTER CONNECTED ?
NO
YES
S3
PRINT ON ?
NO
YES
SEND PRINT ON COMMAND (COLOR MODE COMMAND)
S4
S5
ITOP INPUT ?
NO
YES
SCAN DESIGNATED COLOR MODE
S6
S7
JAM ?
YES
S8
RECEIVE
NO
S10
END ?
NO
S9
READY ?
YES
NO
YES

FIG. 12

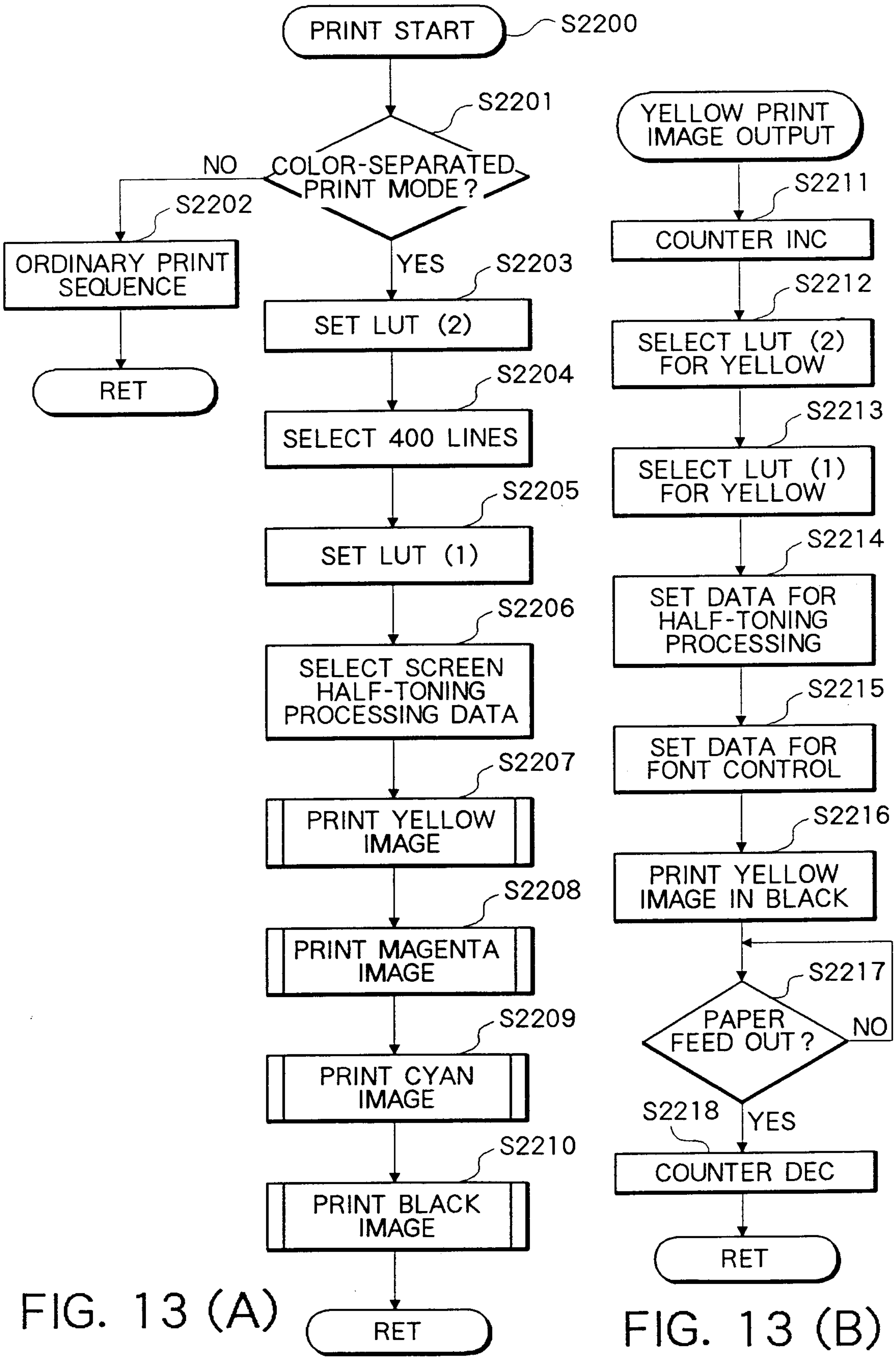


FIG. 13 (A)

FIG. 13 (B)

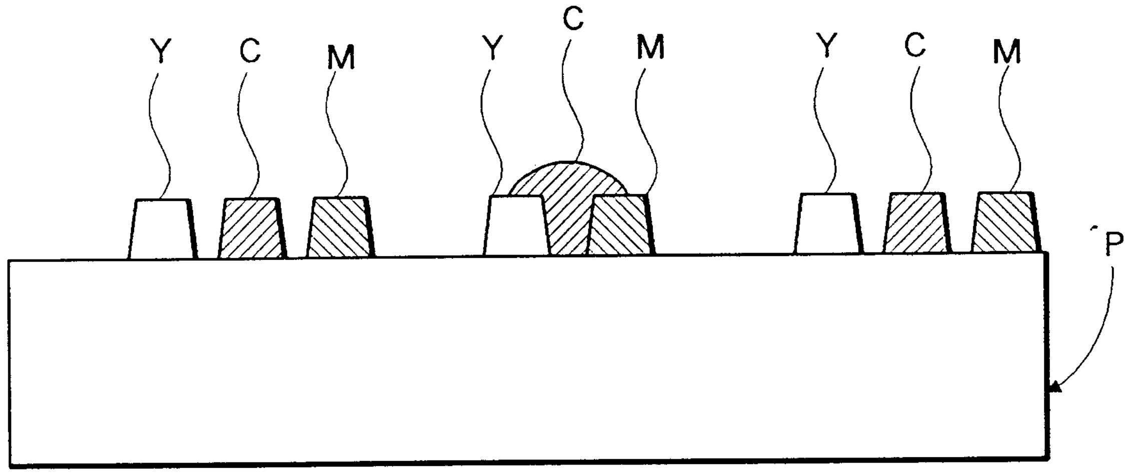


FIG. 14

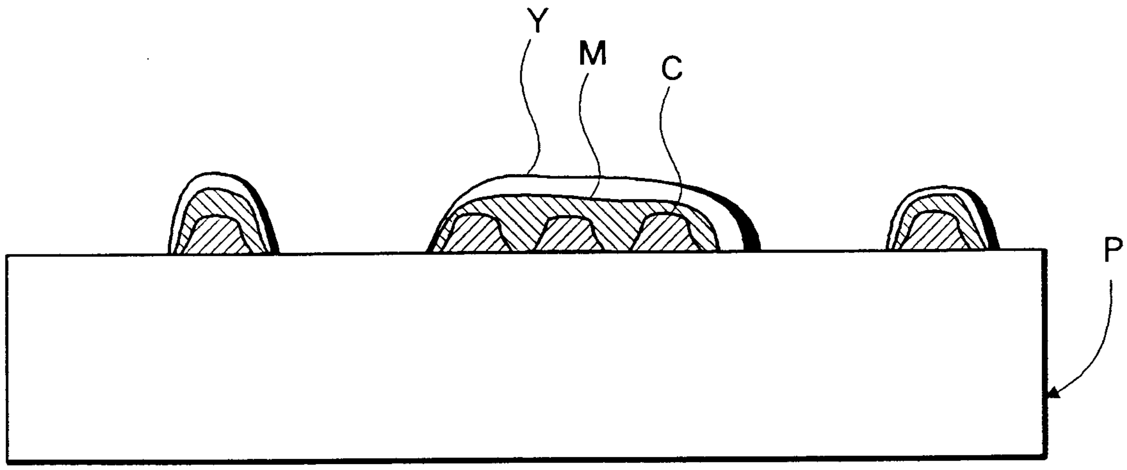


FIG. 15

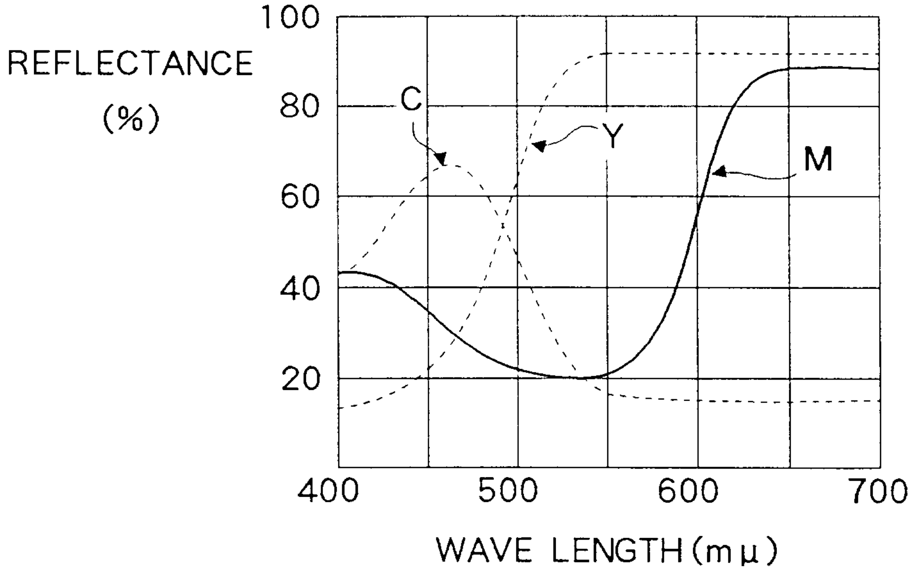
100
REFLECTANCE
(%)
80
60
40
20
C
Y
M
400
500
600
700
WAVE LENGTH (mμ)

FIG. 16

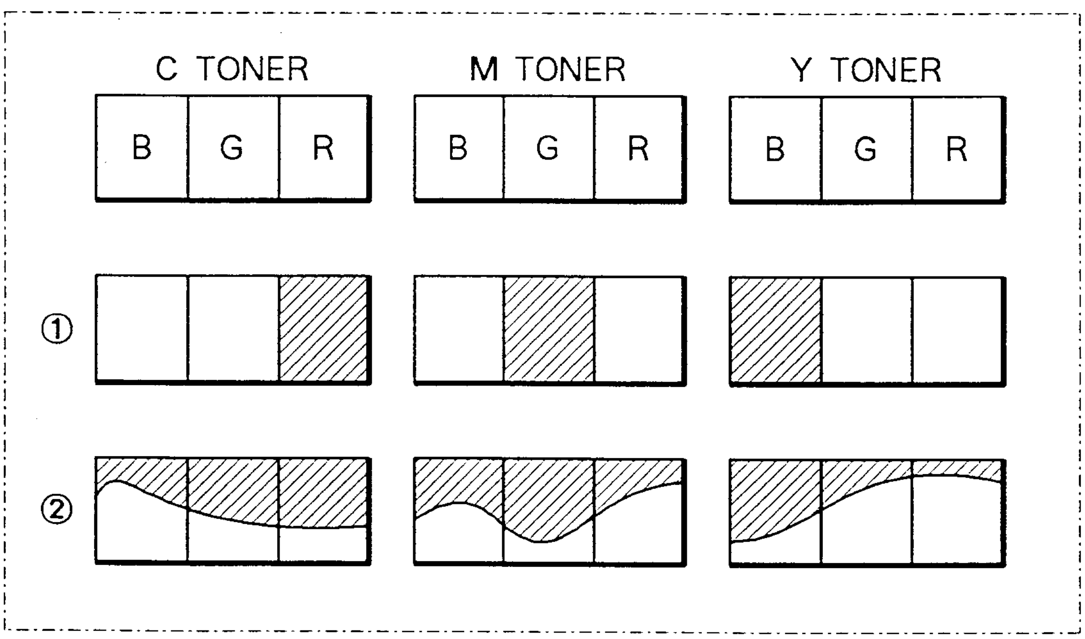
C TONER
M TONER
Y TONER
B
G
R
①
②

FIG. 17

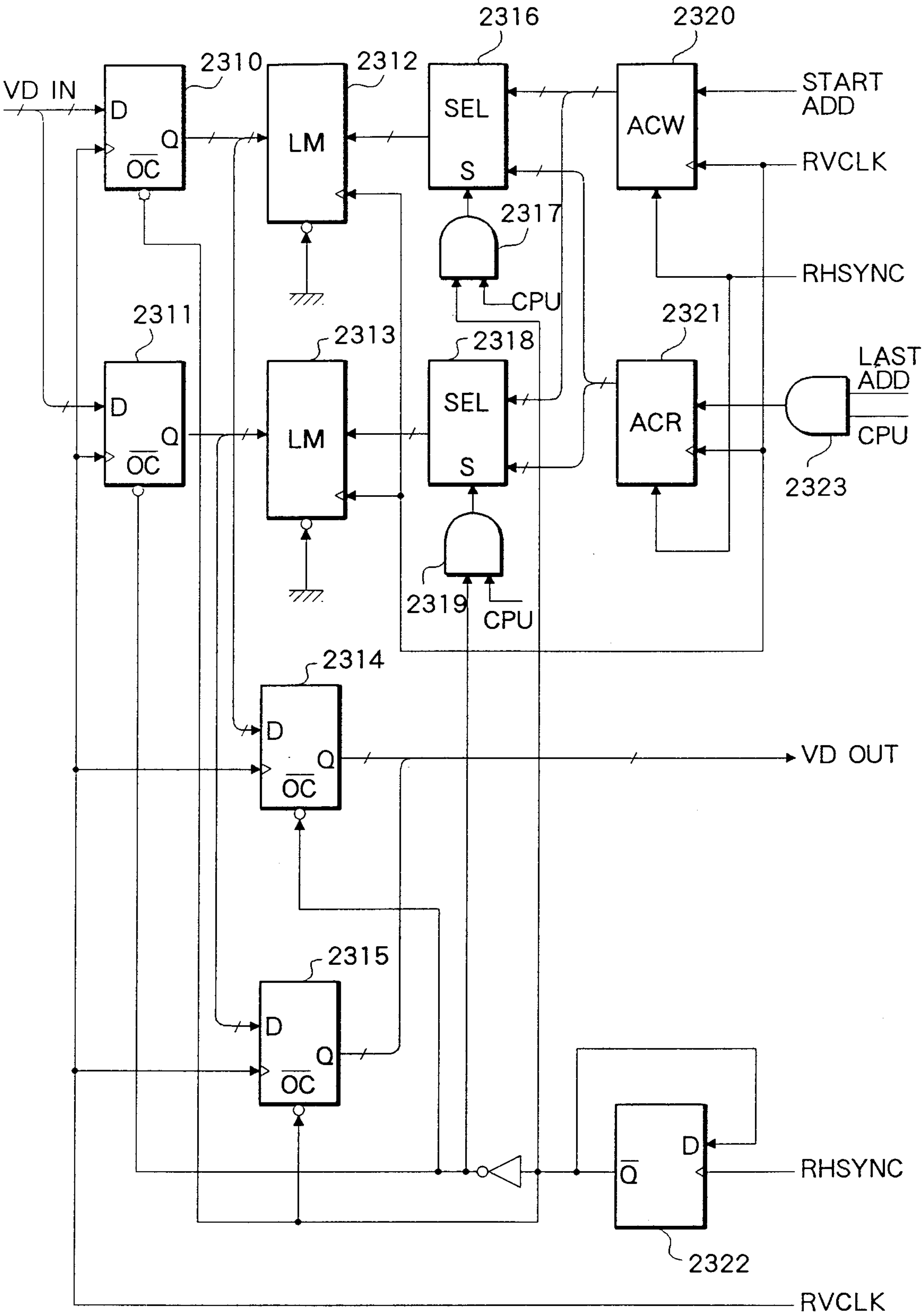
VD IN
D
Q
OC
2310
LM
2312
SEL
S
2316
ACW
2320
START ADD
RVCLK
2317
CPU
RHSYNC
2311
2313
2318
2321
LAST ADD
CPU
ACR
2323
2319
CPU
2314
VD OUT
2315
Q
D
RHSYNC
2322
RVCLK

FIG. 18

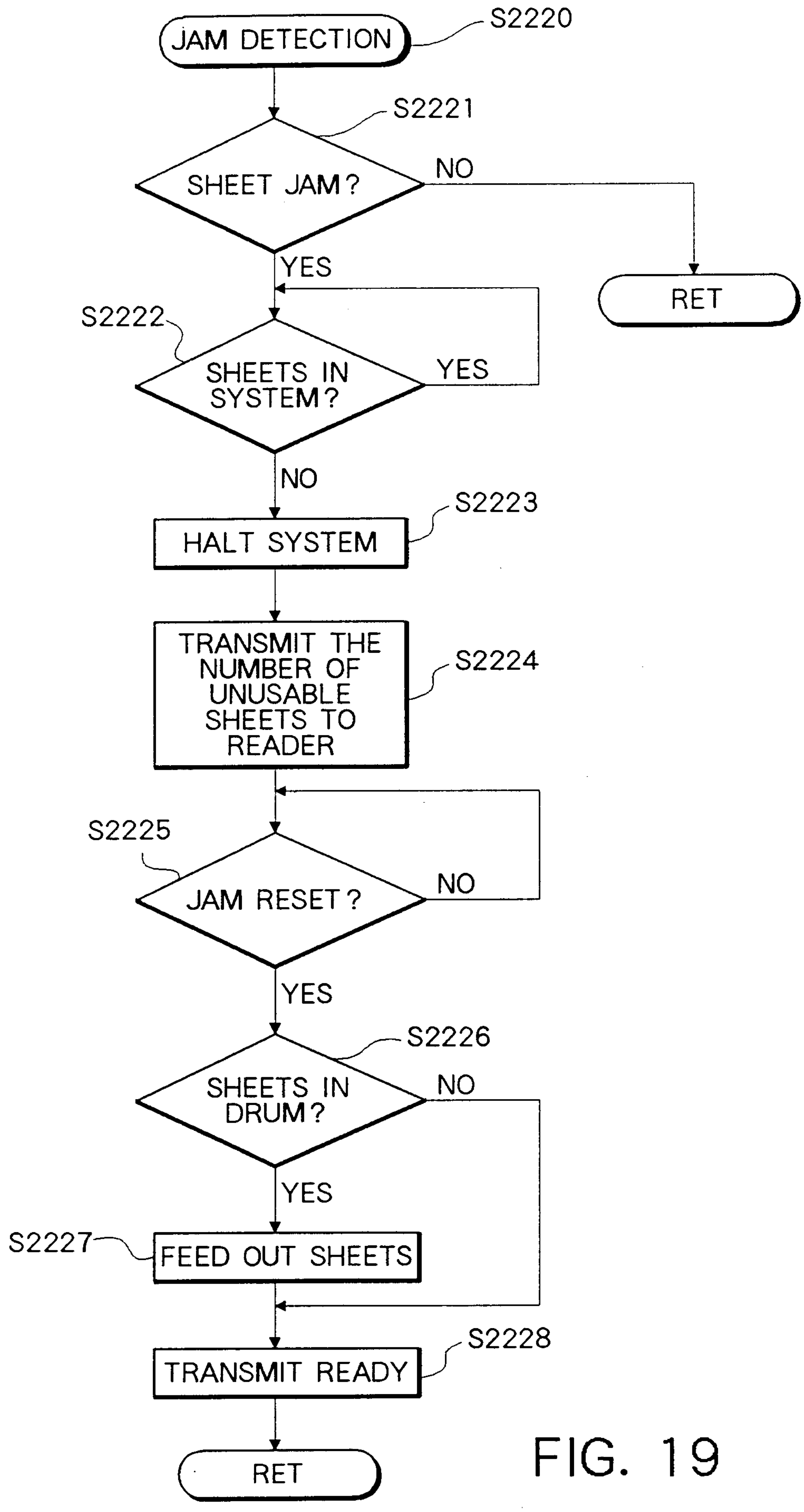
JAM DETECTION
S2220
S2221
SHEET JAM?
NO
YES
RET
S2222
SHEETS IN SYSTEM?
YES
NO
S2223
HALT SYSTEM
TRANSMIT THE NUMBER OF UNUSABLE SHEETS TO READER
S2224
S2225
JAM RESET?
NO
YES
S2226
SHEETS IN DRUM?
NO
YES
S2227
FEED OUT SHEETS
S2228
TRANSMIT READY
RET

FIG. 19